# EUROPEAN PATENT APPLICATION

(11) **EP 4 571 258 A1**
(43) Date of publication of application: **18.06.2025**
(21) Application number: 23853914.2
(22) Date of filing: 14.04.2023
(51) Int. Cl.: G01C 21/34, G01C 21/36

(54) **NAVIGATION METHOD AND APPARATUS, AND MOVING CARRIER**

(30) Priority: 18.08.2022 CN 202210993452
(71) Applicant: Shenzhen Yinwang Intelligent Technologies Co., Ltd., Shenzhen, Guangdong 518129 (CN)
(72) Inventor: LI, Shuai, Shenzhen, Guangdong 518129 (CN); SONG, Xianxi, Shenzhen, Guangdong 518129 (CN); XIA, Pei, Shenzhen, Guangdong 518129 (CN); ZHOU, Jin, Shenzhen, Guangdong 518129 (CN); LI, Teng, Shenzhen, Guangdong 518129 (CN)
(74) Representative: Pfenning, Meinig & Partner mbB
(86) International application number: PCT/CN2023/088377
(87) International publication number: WO 2024/037003

(57) **Abstract**

This application provides a navigation method and apparatus, and a mobile carrier. The method includes: A first device sends first information to a second device, where the first information indicates a first area in which the first device is located; the first device receives second information from the second device, where the second information is used to determine all or some guiding paths from the first area to a second area, and the second area is an area in which the second device is located, or the second area is an area that the first device needs to reach; and the first device controls to display or play navigation information, where the navigation information includes the all or some guiding paths. This application may be applied to an intelligent vehicle or an electric vehicle, to help improve navigation efficiency and user experience.

## Description

This application claims priority to Chinese Patent Application No. 202210993452.9, filed with the China National Intellectual Property Administration on August 18, 2022 and entitled "NAVIGATION METHOD AND APPARATUS, AND MOBILE CARRIER", which is incorporated herein by reference in its entirety.

### TECHNICAL FIELD

This application relates to the field of human-computer interaction, and more specifically, to a navigation method and apparatus, and a mobile carrier.

### BACKGROUND

In real life, it often happens that a driver cannot find a correct destination. In this case, the driver may determine an accurate location of the destination by inquiring a person already at the destination or a person familiar with the destination. However, in some cases, when the person already at the destination or the person familiar with the destination and the driver verbally describe signs within line of sight, these signs are often invisible to each other. This leads to inefficient communication, takes a long time, and affects navigation efficiency.

### SUMMARY

This application provides a navigation method and apparatus, and a mobile carrier, to help improve navigation efficiency of a process in which a user goes to a destination.

The mobile carrier in this application may include a land transportation tool, a water transportation tool, an air transportation tool, an industrial device, an agricultural device, an entertainment device, or the like. For example, the mobile carrier may be a vehicle (sometimes referred to as a car for short). The vehicle is a vehicle in a broad sense, and may be a transportation tool (for example, a commercial automobile, a passenger vehicle, a truck, a motorcycle, an airplane flying vehicle, a train, or a ship), an industrial vehicle (for example, a forklift truck, a trailer, or a tractor), an engineering vehicle (for example, an excavator, a bulldozer, or a crane), an agricultural device (for example, a lawn mower or a harvester), an amusement device, a toy vehicle, or the like. A type of the vehicle is not specifically limited in embodiments of this application. For another example, the mobile carrier may be a transportation means, for example, an airplane or a ship.

This application provides a navigation method. The method includes: A first device sends first information to a second device, where the first information indicates a first area in which the first device is located; the first device receives second information from the second device, where the second information is used to determine all or some guiding paths from the first area to a second area, and the second area is an area in which the second device is located, or the second area is an area that the first device needs to reach; and the first device controls to display or play navigation information, where the navigation information includes the all or some guiding paths.

In the foregoing technical solution, a user who uses the first device may guide a user who uses the second device. For example, the user who uses the second device and who is already at a destination or is familiar with a location of the destination may be assisted to guide the user who uses the first device. This improves communication efficiency between the user who uses the second device and the user who uses the first device, and helps the user who uses the first device quickly reach the destination. In particular, on a road without map support or navigation information, navigation information can be provided, with assistance of the second device, for the user who uses the first device, so that navigation efficiency of the user who uses the first device is improved, and navigation information can be supplemented for the road without navigation information.

With reference to the first aspect, in some implementations of the first aspect, the first information includes first image information, and the first image indicates a first image of the first area.

With reference to the first aspect, in some implementations of the first aspect, the first image includes a first limiting area, the first limiting area indicates a range of a first operation performed by the user who uses the second device, and the first operation is used to generate the second information.

For example, the second information indicates at least one of a line, a text, or a location of a marked place. The marked place indicates the second area or a place that needs to be passed through from the first area to the second area. The line and/or the text indicate/indicates the all or some guiding paths from the first area to the second area.

In the foregoing technical solution, the first limiting area indicates the range of the first operation performed by the user who uses the second device. This helps the first device control a first display device to directly display the line, the text, the location of the marked place, and the like that are indicated by the second information. Therefore, a delay in indicating the navigation information by the second device for the user who uses the first device is reduced, and navigation efficiency is further improved.

With reference to the first aspect, in some implementations of the first aspect, the method further includes: The first device obtains image shooting range information of a first sensor and display range information of a first display device, where the first sensor is configured to obtain an image for generating the first image information, and the first display device is configured to display the navigation information; and the first device determines the first limiting area based on the image shooting range information and the display range information.

With reference to the first aspect, in some implementations of the first aspect, that the first device controls to display or play navigation information includes: The first device controls to display the navigation information on a basis of a second image, where the second image is an image generated based on the second information.

For example, the second image may be an image generated based on an electronic map, for example, may be generated based on a map like a high-precision map or a real-world map.

In the foregoing technical solution, the second image is generated based on the second information, and the navigation information is displayed based on the second image. This helps improve navigation precision.

With reference to the first aspect, in some implementations of the first aspect, that the first device controls to display or play navigation information includes: The first device controls to display the navigation information on a basis of a third image, where the third image is an image generated based on an image of the first area.

In some possible implementations, the first device controls a head up display (head up display, HUD) apparatus to display the navigation information on the basis of the third image.

In some possible implementations, the first device controls an in-vehicle display to display the navigation information on the basis of the third image.

For example, the image of the first area may include an image that can indicate the first area. For example, the first device is disposed in a mobile carrier, or the first device is associated with a mobile carrier. The image of the first area may be a road image shot by the mobile carrier. It should be understood that the location of the first area may be determined based on the road image.

In the foregoing technical solution, the third image is generated based on an obtained real-time image, and the navigation information is displayed on the basis of the third image, so that the navigation information can be presented to the user more vividly. This helps the user quickly determine a motion path in a current scenario with reference to the third image, and helps improve user experience in a navigation process. In particular, on a road without navigation information, navigation information can be provided for the user who uses the first device with assistance of the second device, so that navigation experience of the user is improved.

With reference to the first aspect, in some implementations of the first aspect, the method further includes: The first device controls to stop displaying or playing the navigation information when one or more of the following conditions are met: duration for which the first device controls to display the navigation information is greater than or equal to a preset threshold; the first device passes through a road section indicated by the all or some guiding paths; and the first device arrives at the second area.

For example, the preset threshold may be 2 seconds, 3 seconds, or another value. This is not specifically limited in this application.

In some possible implementations, the first device controls the HUD to display the navigation information, and the foregoing technical solution can reduce blocking of the navigation information from the line of sight of the user.

In some possible implementations, the first device controls the in-vehicle display to display the navigation information, or the first device displays the navigation information.

In the foregoing technical solution, in a specific case, controlling to stop displaying the navigation information helps reduce energy consumption required for displaying the navigation information. When the navigation information is displayed through the HUD, blocking of the navigation information from the line of sight of the user is further reduced, and driving safety is improved.

With reference to the first aspect, in some implementations of the first aspect, the method further includes: The first device controls to obtain the first information based on a first instruction.

In some possible implementations, the first instruction is generated in response to an input of the user who uses the first device. For example, when the user who uses the first device controls the first device to communicate with the second device, the first device generates the first instruction.

In the foregoing technical solution, the first instruction can be generated in response to the input of the user who uses the first device. This helps improve interaction experience of the user who uses the first device in the navigation process.

In some possible implementations, the first instruction is generated in response to an input of the user who uses the second device. For example, when the user who uses the second device controls the second device to communicate with the first device, the second device generates the first instruction, and sends the first instruction to the first device.

In some possible implementations, the first instruction is automatically generated by the first device. For example, after the first device establishes a communication relationship with the second device, the first device may generate the first instruction when detecting that a current area lacks navigation information.

In the foregoing technical solution, the first device automatically generates the first instruction. This helps improve an intelligence degree of the first device (or the mobile carrier), and further improves navigation efficiency.

With reference to the first aspect, in some implementations of the first aspect, the navigation information includes a marked place and/or a distance between the marked place and the first area, and the marked place indicates the second area or the place that needs to be passed through from the first area to the second area.

In an example, the marked place is the second area.

In another example, if a place A and a place B need to be passed through from the first area to the second area, the marked place may alternatively be the place A or the place B.

In the foregoing technical solution, the marked place and/or the distance between the marked place and the first area are/is directly displayed through the navigation information, so that the user who uses the first device can more intuitively learn a location of the user and a location of a target place (for example, the marked place). This helps improve user experience in the navigation process.

With reference to the first aspect, in some implementations of the first aspect, the method further includes: The first device determines the marked place and the distance between the marked place and the first area based on the second information.

In some possible implementations, the marked place and the distance between the marked place and the first area may alternatively be determined by a cloud server and sent to the first device.

With reference to the first aspect, in some implementations of the first aspect, the method further includes: The first device controls, based on at least one of identity information of a user, the first area, and the second area, to store the all or some guiding paths from the first area to the second area, where the user includes the user who uses the first device and/or the user who uses the second device.

In the foregoing technical solution, the all or some guiding paths from the first area to the second area are stored. This helps the user directly invoke the all or some guiding paths for navigation when the user needs to go from the first area to the second area or from the second area to the first area next time.

With reference to the first aspect, in some implementations of the first aspect, the second information includes layer information, and the layer information includes at least one of the following information: a line, a text, a location of the marked place, and an identifier.

For example, the marked place indicates the second area or the place that needs to be passed through from the first area to the second area. The line and/or the text indicate/indicates the all or some guiding paths from the first area to the second area. The identifier may be a building or a reference object in the second area, or a building or a reference object that is passed through from the first area to the second area. For example, the reference object may be a plant (for example, a tree), a road sign, or another object.

In some possible implementations, the marked place may be determined based on the identifier. For example, a location of the identifier may be determined as the marked place.

In some possible implementations, when the marked place indicates the place that needs to be passed through from the first area to the second area, the place may be a location at which a driving direction or a walking direction needs to be changed, for example, a location at which a turning is required.

With reference to the first aspect, in some implementations of the first aspect, the first image is shot by at least one of a DMS camera, a CMS camera, or a dashboard camera.

According to a second aspect, a navigation method is provided. The method includes: A second device receives first information sent by a first device, where the first information indicates a first area in which the first device is located; the second device determines second information based on the first information, where the second information is used to determine all or some guiding paths from the first area to a second area, and the second area is an area in which the second device is located, and/or the second area is an area that the first device needs to reach; and the second device sends the second information to the first device.

In the foregoing technical solution, a user who uses the second device and who is already at a destination or is familiar with a location of the destination may be assisted to guide a user who uses the first device. This improves communication efficiency between the user who uses the second device and the user who uses the first device, and helps the user who uses the first device quickly reach the destination. In particular, on a road without map support or navigation information, navigation information can be provided, with assistance of the second device, for the user who uses the first device, so that experience of the user who uses the first device is improved.

With reference to the second aspect, in some implementations of the second aspect, the first information includes first image information, and the first image indicates a first image of the first area.

With reference to the second aspect, in some implementations of the second aspect, the method further includes: The second device generates first indication information, where the first indication information indicates that the second information is generated based on the first image; and the second device sends the first indication information to the first device.

With reference to the second aspect, in some implementations of the second aspect, the second information includes layer information, and the layer information includes at least one of the following information: a line, a text, and a location of a marked place. The marked place indicates the second area or a place that needs to be passed through from the first area to the second area. The line and/or the text indicate/indicates the all or some guiding paths from the first area to the second area.

According to a third aspect, a navigation method is provided. The method includes:
A first server receives information, where the information includes first information and second information or the information includes the second information, the first information indicates a first area in which a first device is located, the second information is used to determine all or some guiding paths from the first area to a second area, and the second area is an area in which a second device is located or the second area is an area that the first device needs to reach; the first server determines navigation information based on the information; and the first server sends the navigation information to the first device.

The first server may receive the information from one device, for example, receive the information from the first device, or receive the information from the second device. The first server may alternatively receive the information from a plurality of devices, for example, receive the first information from the first device, and receive the second information from the second device.

With reference to the third aspect, in some implementations of the third aspect, the first information includes first image information, and the first image indicates a first image of the first area.

With reference to the third aspect, in some implementations of the third aspect, the first image includes a first limiting area, the first limiting area indicates a range of a first operation performed by a user who uses the second device, and the first operation is used to generate the second information.

With reference to the third aspect, in some implementations of the third aspect, the first server controls, based on at least one of identity information of a user, the first area, and the second area, to store the all or some guiding paths from the first area to the second area, where the user includes a user who uses the first device and/or the user who uses the second device.

With reference to the third aspect, in some implementations of the third aspect, the second information includes layer information, and the layer information includes at least one of the following information: a line, a text, a location of a marked place, and an identifier.

According to a fourth aspect, a navigation method is provided. The method includes: A first device receives navigation information from a first server, where the navigation information includes all or some guiding paths from a first area to a second area, the first area is an area in which the first device is located, and the second area is an area in which a second device is located, or the second area is an area that the first device needs to reach; and the first device controls to display or play the navigation information.

With reference to the fourth aspect, in some implementations of the fourth aspect, the method further includes: The first device sends first information to the first server.

With reference to the fourth aspect, in some implementations of the fourth aspect, the method further includes: The first device sends the first information to the second device, where the first information is used by the second device to generate second information, and the second information is used to determine the all or some guiding paths from the first area to the second area.

With reference to the fourth aspect, in some implementations of the fourth aspect, the second information includes layer information, and the layer information includes at least one of the following information: a line, a text, a location of a marked place, and an identifier.

With reference to the fourth aspect, in some implementations of the fourth aspect, the first information includes first image information, and the first image indicates a first image of the first area.

With reference to the fourth aspect, in some implementations of the fourth aspect, the first image includes a first limiting area, the first limiting area indicates a range of a first operation performed by a user who uses the second device, and the first operation is used to generate the second information.

With reference to the fourth aspect, in some implementations of the fourth aspect, the method further includes: The first device obtains image shooting range information of a first sensor and display range information of a first display device, where the first sensor is configured to obtain an image for generating the first image, and the first display device is configured to display the navigation information; and the first device determines the first limiting area based on the image shooting range information and the display range information.

With reference to the fourth aspect, in some implementations of the fourth aspect, that the first device controls to display or play the navigation information includes: The first device controls to display the navigation information on a basis of a second image, where the second image is an image generated based on the second information.

With reference to the fourth aspect, in some implementations of the fourth aspect, that the first device controls to display or play the navigation information includes: The first device controls to display the navigation information on a basis of a third image, where the third image is an image generated based on an image of the first area.

With reference to the fourth aspect, in some implementations of the fourth aspect, the method further includes: The first device controls to stop displaying or playing the navigation information when one or more of the following conditions are met: duration for which the first device controls to display the navigation information is greater than or equal to a preset threshold; the first device passes through a road section indicated by the all or some guiding paths; and the first device arrives at the second area.

With reference to the fourth aspect, in some implementations of the fourth aspect, the method further includes: The first device controls to obtain the first information based on a first instruction.

With reference to the fourth aspect, in some implementations of the fourth aspect, the navigation information includes a marked place and/or a distance between the marked place and the first area, and the marked place indicates the second area or a place that needs to be passed through from the first area to the second area.

According to a fifth aspect, a navigation method is provided. The method includes: A second device receives first information, where the first information indicates a first area in which a first device is located; the second device determines second information based on the first information, where the second information is used to determine all or some guiding paths from the first area to a second area, and the second area is an area in which the second device is located, and/or the second area is an area that the first device needs to reach; and the second device sends the second information to the first device.

With reference to the fifth aspect, in some implementations of the fifth aspect, the first information includes first image information, and the first image indicates a first image of the first area.

With reference to the fifth aspect, in some implementations of the fifth aspect, the method further includes: The second device generates first indication information, where the first indication information indicates that the second information is generated based on the first image; and the second device sends the first indication information to the first device.

With reference to the fifth aspect, in some implementations of the fifth aspect, the second information includes layer information, and the layer information includes at least one of the following information: a line, a text, a location of a marked place, and an identifier.

According to a sixth aspect, a navigation apparatus is provided. The apparatus includes: a transceiver unit, configured to: send first information to a second device, where the first information indicates a first area in which a first device is located; and receive second information from the second device, where the second information is used to determine all or some guiding paths from the first area to a second area, and the second area is an area in which the second device is located, or the second area is an area that the first device needs to reach; and a processing unit, configured to control to display or play navigation information, where the navigation information includes the all or some guiding paths.

With reference to the sixth aspect, in some implementations of the sixth aspect, the first information includes first image information, and the first image indicates a first image of the first area.

With reference to the sixth aspect, in some implementations of the sixth aspect, the first image includes a first limiting area, the first limiting area indicates a range of a first operation performed by a user who uses the second device, and the first operation is used to generate the second information.

With reference to the sixth aspect, in some implementations of the sixth aspect, the apparatus further includes an obtaining unit, configured to obtain image shooting range information of a first sensor and display range information of a first display device, where the first sensor is configured to obtain an image for generating the first image information, and the first display device is configured to display the navigation information. The processing unit is further configured to determine the first limiting area based on the image shooting range information and the display range information.

With reference to the sixth aspect, in some implementations of the sixth aspect, the processing unit is specifically configured to control to display the navigation information on a basis of a second image, where the second image is an image generated based on the second information.

With reference to the sixth aspect, in some implementations of the sixth aspect, the processing unit is specifically configured to control to display the navigation information on a basis of a third image, where the third image is an image generated based on an image of the first area.

With reference to the sixth aspect, in some implementations of the sixth aspect, the processing unit controls to stop displaying or playing the navigation information when one or more of the following conditions are met: duration for which the navigation information is controlled to be displayed is greater than or equal to a preset threshold; the first device passes through a road section indicated by the all or some guiding paths; and the first device arrives at the second area.

With reference to the sixth aspect, in some implementations of the sixth aspect, the processing unit is further configured to control to obtain the first information based on a first instruction.

With reference to the sixth aspect, in some implementations of the sixth aspect, the navigation information includes a marked place and/or a distance between the marked place and the first area, and the marked place indicates the second area or a place that needs to be passed through from the first area to the second area.

With reference to the sixth aspect, in some implementations of the sixth aspect, the processing unit is further configured to determine the marked place and the distance between the marked place and the first area based on the second information.

With reference to the sixth aspect, in some implementations of the sixth aspect, the processing unit is further configured to control, based on at least one of identity information of a user, the first area, and the second area, to store the all or some guiding paths from the first area to the second area, where the user includes a user who uses the first device and/or the user who uses the second device.

With reference to the sixth aspect, in some implementations of the sixth aspect, the second information includes layer information, and the layer information includes at least one of the following information: a line, a text, a location of the marked place, and an identifier.

According to a seventh aspect, a navigation apparatus is provided. The apparatus includes: a transceiver unit, configured to receive first information sent by a first device, where the first information indicates a first area in which the first device is located; and a processing unit, configured to determine second information based on the first information, where the second information is used to determine all or some guiding paths from the first area to a second area, and the second area is an area in which a second device is located, and/or the second area is an area that the first device needs to reach. The transceiver unit is further configured to send the second information to the first device.

With reference to the seventh aspect, in some implementations of the seventh aspect, the first information includes first image information, and the first image indicates a first image of the first area.

With reference to the seventh aspect, in some implementations of the seventh aspect, the processing unit is further configured to generate first indication information, where the first indication information indicates that the second information is generated based on the first image. The transceiver unit is further configured to send the first indication information to the first device.

With reference to the seventh aspect, in some implementations of the seventh aspect, the second information includes layer information, and the layer information includes at least one of the following information: a line, a text, a location of a marked place, and an identifier.

According to an eighth aspect, a navigation apparatus is provided. The apparatus includes: a transceiver unit, configured to receive information; and a processing unit, configured to determine navigation information based on the information. The transceiver unit is further configured to send the navigation information to a first device, where the information includes second information, or the information includes first information and second information, the first information indicates a first area in which the first device is located, the second information is used to determine all or some guiding paths from the first area to a second area, and the second area is an area in which the second device is located, or the second area is an area that the first device needs to reach.

With reference to the eighth aspect, in some implementations of the eighth aspect, the first information includes first image information, and the first image indicates a first image of the first area.

With reference to the eighth aspect, in some implementations of the eighth aspect, the first image includes a first limiting area, the first limiting area indicates a range of a first operation performed by a user who uses the second device, and the first operation is used to generate the second information.

With reference to the eighth aspect, in some implementations of the eighth aspect, a first server controls, based on at least one of identity information of a user, the first area, and the second area, to store the all or some guiding paths from the first area to the second area, where the user includes a user who uses the first device and/or the user who uses the second device.

With reference to the eighth aspect, in some implementations of the eighth aspect, the second information includes layer information, and the layer information includes at least one of the following information: a line, a text, a location of a marked place, and an identifier.

According to a ninth aspect, a navigation apparatus is provided. The apparatus includes: a transceiver unit, configured to receive navigation information from a first server, where the navigation information includes all or some guiding paths from a first area to a second area, the first area is an area in which a first device is located, and the second area is an area in which a second device is located, or the second area is an area that the first device needs to reach; and a processing unit, configured to control to display or play the navigation information.

With reference to the ninth aspect, in some implementations of the ninth aspect, the transceiver unit is further configured to send first information to the first server.

With reference to the ninth aspect, in some implementations of the ninth aspect, the transceiver unit is further configured to send the first information to the second device, where the first information is used by the second device to generate second information, and the second information is used to determine the all or some guiding paths from the first area to the second area.

With reference to the ninth aspect, in some implementations of the ninth aspect, the second information includes layer information, and the layer information includes at least one of the following information: a line, a text, a location of a marked place, and an identifier.

With reference to the ninth aspect, in some implementations of the ninth aspect, the first information includes first image information, and the first image indicates a first image of the first area.

With reference to the ninth aspect, in some implementations of the ninth aspect, the first image includes a first limiting area, the first limiting area indicates a range of a first operation performed by a user who uses the second device, and the first operation is used to generate the second information.

With reference to the ninth aspect, in some implementations of the ninth aspect, the apparatus further includes an obtaining unit, configured to obtain image shooting range information of a first sensor and display range information of a first display device, where the first sensor is configured to obtain an image for generating the first image, and the first display device is configured to display the navigation information. The processing unit is further configured to determine the first limiting area based on the image shooting range information and the display range information.

With reference to the ninth aspect, in some implementations of the ninth aspect, the processing unit is further configured to control to display the navigation information on a basis of a second image, where the second image is an image generated based on the second information.

With reference to the ninth aspect, in some implementations of the ninth aspect, the processing unit is further configured to control to display the navigation information on a basis of a third image, where the third image is an image generated based on an image of the first area.

With reference to the ninth aspect, in some implementations of the ninth aspect, the processing unit is further configured to control to stop displaying or playing the navigation information when one or more of the following conditions are met: duration for which the navigation information is controlled to be displayed is greater than or equal to a preset threshold; the first device passes through a road section indicated by the all or some guiding paths; and the first device arrives at the second area.

With reference to the ninth aspect, in some implementations of the ninth aspect, the processing unit is further configured to control to obtain the first information based on a first instruction.

With reference to the ninth aspect, in some implementations of the ninth aspect, the navigation information includes a marked place and/or a distance between the marked place and the first area, and the marked place indicates the second area or a place that needs to be passed through from the first area to the second area.

According to a tenth aspect, a navigation apparatus is provided. The apparatus includes: a transceiver unit, configured to receive first information, where the first information indicates a first area in which a first device is located; and a processing unit, configured to determine second information based on the first information, where the second information is used to determine all or some guiding paths from the first area to a second area, and the second area is an area in which a second device is located, and/or the second area is an area that the first device needs to reach. The transceiver unit is further configured to send the second information to a first server.

With reference to the tenth aspect, in some implementations of the tenth aspect, the first information includes first image information, and the first image indicates a first image of the first area.

With reference to the tenth aspect, in some implementations of the tenth aspect, the processing unit is further configured to generate first indication information, where the first indication information indicates that the second information is generated based on the first image. The transceiver unit is further configured to send the first indication information to the first server.

With reference to the tenth aspect, in some implementations of the tenth aspect, the second information includes layer information, and the layer information includes at least one of the following information: a line, a text, a location of a marked place, and an identifier.

According to an eleventh aspect, a navigation apparatus is provided. The apparatus includes a processing unit and a storage unit. The storage unit is configured to store instructions. The processing unit executes the instructions stored in the storage unit, so that the apparatus is enabled to perform any one of the possible methods of the first aspect to the fifth aspect.

Optionally, the processing unit may include at least one processor. The storage unit may be a memory. The memory may be a storage unit (for example, a register or a cache) in a chip, or may be a storage unit (for example, a read-only memory or a random access memory) that is in a mobile carrier and that is outside the chip.

According to a twelfth aspect, an electronic device is provided. The electronic device includes the apparatus according to any one of the implementations of the sixth aspect, or the apparatus according to any one of the implementations of the seventh aspect, or the apparatus according to any one of the implementations of the ninth aspect, or the apparatus according to any one of the implementations of the tenth aspect.

According to a thirteenth aspect, a mobile carrier is provided. The mobile carrier includes the apparatus according to any one of the implementations of the sixth aspect, or the apparatus according to any one of the implementations of the seventh aspect, or the apparatus according to any one of the implementations of the ninth aspect, or the apparatus according to any one of the implementations of the tenth aspect.

With reference to the thirteenth aspect, in some implementations of the thirteenth aspect, the mobile carrier is a vehicle.

According to a fourteenth aspect, a server is provided. The server includes the apparatus according to any one of the implementations of the eighth aspect.

According to a fifteenth aspect, a navigation system is provided. The system includes the apparatus according to any one of the implementations of the sixth aspect and the apparatus according to any one of the implementations of the seventh aspect.

According to a sixteenth aspect, a navigation system is provided. The system includes the apparatus according to any one of the implementations of the eighth aspect, the apparatus according to any one of the implementations of the ninth aspect, and the apparatus according to any one of the implementations of the tenth aspect.

According to a seventeenth aspect, a computer program product is provided. The computer program product includes computer program code. When the computer program code is run on a computer, the computer is enabled to perform the method according to any one of the possible implementations of the first aspect to the fifth aspect.

It should be noted that all or a part of computer program code may be stored in a first storage medium. The first storage medium may be encapsulated together with a processor, or may be encapsulated separately from a processor. This is not specifically limited in embodiments of this application.

According to an eighteenth aspect, a computer-readable medium is provided. The computer-readable medium stores instructions. When the instructions are executed by a processor, the processor is enabled to perform the method according to any one of the possible implementations of the first aspect to the fifth aspect.

According to a nineteenth aspect, a chip is provided. The chip includes a processor, configured to invoke a computer program or computer instructions stored in a memory, so that the processor is enabled to perform the method according to any one of the possible implementations of the first aspect to the fifth aspect.

With reference to the nineteenth aspect, in a possible implementation, the processor is coupled to the memory through an interface.

With reference to the nineteenth aspect, in a possible implementation, the chip further includes a memory, and the memory stores a computer program or computer instructions.

This application provides a navigation method and apparatus, and a mobile carrier, to assist a user who uses a second device and who is already at a destination or is familiar with a location of the destination in guiding a user who uses a first device. This improves communication efficiency between the user who uses the second device and the user who uses the first device, and helps the user who uses the first device quickly reach the destination. In particular, on a road without map support or navigation information, navigation information can be provided, with assistance of the second device, for the user who uses the first device, so that navigation efficiency of the user who uses the first device is improved, and navigation information can be supplemented for the road without navigation information. When controlling to display the navigation information, the first device may control to display the navigation information on a basis of a third image generated based on an image of an area in which the first device is located, so that the navigation information can be presented to the user more vividly. This helps the user quickly determine a motion path in a current scenario with reference to the third image or a second image, and helps improve user experience in a navigation process. Alternatively, the first device may control to display the navigation information on a basis of a second image generated based on second information, and helps improve navigation precision. In this application, all or some guiding paths from a first area to a second area are stored. This helps the user directly invoke the all or some guiding paths for navigation when the user needs to go from the first area to the second area or from the second area to the first area next time. In a specific case, controlling to stop displaying the navigation information helps reduce energy consumption required for displaying the navigation information. When the navigation information is displayed through a HUD, blocking of the navigation information from a line of sight of the user is further reduced, and driving safety is improved.

### BRIEF DESCRIPTION OF DRAWINGS

FIG. 1 is an application scenario of a navigation method according to an embodiment of this application;
FIG. 2 is a diagram of a mobile carrier cockpit scenario according to an embodiment of this application;
FIG. 3 is a diagram of a framework of a navigation system according to an embodiment of this application;
FIG. 4(a) and FIG. 4(b) are a schematic flowchart of a navigation method according to an embodiment of this application;
FIG. 5 is a schematic flowchart of a navigation method according to an embodiment of this application;
FIG. 6(a) to FIG. 6(g) show a group of GUIs according to an embodiment of this application;
FIG. 7(a) to FIG. 7(d) show another group of GUIs according to an embodiment of this application;
FIG. 8(a) and FIG. 8(b) show still another group of GUIs according to an embodiment of this application;
FIG. 9 shows still another group of GUIs according to an embodiment of this application;
FIG. 10 is a block diagram of a navigation apparatus according to an embodiment of this application;
FIG. 11 is a block diagram of a navigation apparatus according to an embodiment of this application;
FIG. 12 is a block diagram of a navigation apparatus according to an embodiment of this application; and
FIG. 13 is a diagram of a navigation system according to an embodiment of this application.

### DESCRIPTION OF EMBODIMENTS

The following describes the technical solutions in embodiments of this application with reference to the accompanying drawings in embodiments of this application.

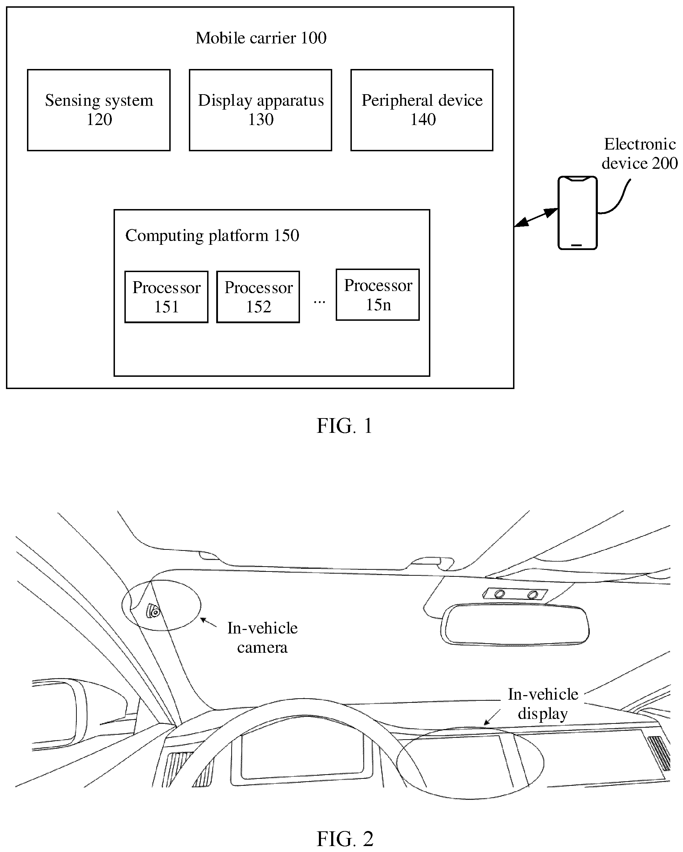

FIG. 1 is an application scenario of a navigation method according to an embodiment of this application. The application scenario may include a mobile carrier 100 and an electronic device 200.

The mobile carrier 100 may include a sensing system 120, a display apparatus 130, a peripheral device 140, and a computing platform 150. The sensing system 120 may include one or more sensors that sense information about an environment around the mobile carrier 100. For example, the sensing system 120 may include a positioning system, and the positioning system may be a global positioning system (global positioning system, GPS), or may be a BeiDou system or another positioning system, or an inertial measurement unit (inertial measurement unit, IMU). For another example, the sensing system 120 may further include one or more of a lidar, a millimeter-wave radar, an ultrasonic radar, and a camera apparatus. The sensing system 120 may further include a sound wave sensor, configured to detect audio information in a cockpit. The camera apparatus may include a red, green and blue/infrared (red, green and blue/infrared, RGB/IR) camera, or may include a depth camera, such as a time of flight (time of flight, TOF) camera, a binocular camera, or a structured light camera.

The display apparatus 130 in the cockpit is mainly classified into two types: A first type is an in-vehicle display, and a second type is a projection display, for example, a HUD. The in-vehicle display is a physical display and is an important part of an in-vehicle infotainment system. A plurality of displays can be disposed in the cockpit, such as a digital instrument display, a central control screen, a display in front of a passenger (also referred to as a front passenger) in a front passenger seat, a display in front of a left rear passenger, and a display in front of a right rear passenger. Even a window can be used as a display for displaying. A head-up display is also referred to as head-up display system. The head-up display is mainly configured to display driving information such as a speed and navigation on a display device (for example, a windshield) in front of a driver, to reduce line-of-sight transfer time of the driver, avoid a pupil change caused by a line-of-sight transfer of the driver, and improve driving safety and comfort. For example, the HUD includes a combiner-HUD (combiner-HUD, C-HUD) system, a windshield-HUD (windshield-HUD, W-HUD) system, and an augmented reality-HUD (augmented reality-HUD, AR-HUD) system.

The mobile carrier 100 interacts with the electronic device 200, an external sensor, another mobile carrier, another computer system, or a user through the peripheral device 140. The peripheral device 140 may include, for example, one or more of an input/output device, a wired or wireless communication interface, a microphone, a loudspeaker, and the like.

Some or all of functions of the mobile carrier 100 may be controlled by the computing platform 150. The computing platform 150 may include one or more processors, such as processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

In this embodiment of this application, the processor may generate a guiding path based on image information that is of the environment around the mobile carrier and that is obtained from the sensing system 120 and guiding information (for example, graffiti) that is about the environment around the mobile carrier and that is obtained from the electronic device, to control the display apparatus 130 to display the guiding path. In some possible implementations, an image of the environment around the mobile carrier, the guiding information about the environment around the mobile carrier, and the like may be further stored in the memory of the computing platform 150 in a form of data.

It should be understood that the foregoing operations may be performed by a same processor, or may be performed by a plurality of processors. This is not specifically limited in embodiments of this application.

FIG. 2 is a diagram of a mobile carrier cockpit scenario according to an embodiment of this application. One or more cameras may be installed inside or outside an intelligent cockpit, and are configured to capture an image of the inside or the outside of the cockpit. The camera is, for example, a camera of a driver monitoring system (driver monitoring system, DMS), a camera of a cabin monitoring system (cabin monitoring system, CMS), or a camera of a dashcam (dashcam). For example, in FIG. 2, a camera is disposed on an A-pillar. The cameras configured to capture the inside and outside of the cockpit may be a same camera, or may be different cameras. In addition, an in-vehicle display is further disposed in the cockpit. In FIG. 2, a display disposed in a central control area is used as an example. One or more pieces of information required for driving, audio and video entertainment information, vehicle configuration information, and the like may be displayed through the in-vehicle display. It should be understood that, in embodiments of this application, a location of a camera that collects image information in the cockpit is not specifically limited. The camera may be located on an A-pillar shown in FIG. 2, or may be located below a steering wheel, or may be located on a B-pillar, or may be located near a rear-view mirror, or the like.

As mentioned above, in real life, it often happens that a driver cannot find a correct destination. For example, Xiao Ming hails a taxi online at a building C in a campus B of a company A at night. Because there are many buildings in the campus B and there is no clear identifier, and/or it is difficult to accurately find the building C due to bad weather or late time, it is difficult for Xiao Ming and an online car-hailing driver to find an appropriate reference object. During communication between Xiao Ming and the online car-hailing driver, invalid descriptions are used, for example, "I am at a door of a building where there are many electric bikes". In another example, Xiao Ming is at home. After entering a residential compound, an online car-hailing driver cannot find a building in which Xiao Ming's home is located. In another example, a friend of Xiao Ming goes to Xiao Ming's home as a guest, and cannot find a building in which Xiao Ming's home is located after entering a residential compound. In another example, Xiao Ming drives to a large stadium to attend a conference, and cannot find a specific location of the large stadium after entering a campus in which the large stadium is located. In another example, in some cases, a passable road displayed on a map application or a navigation application is closed due to reasons such as construction, and a map is not updated in time. As a result, navigation cannot be correctly performed. A driver cannot quickly determine another route to a destination, and a person who is already at the destination or a person who is familiar with the destination may be required to guide the driver. In view of this, embodiments of this application provide a navigation method and apparatus, and a mobile carrier, to assist a user who is already at a destination or is familiar with a route to the destination in guiding a user who is unfamiliar with a road. This improves communication efficiency between the two users, and helps the user who is unfamiliar with a location of the destination or is unfamiliar with a route to the destination learn of the route to the destination.

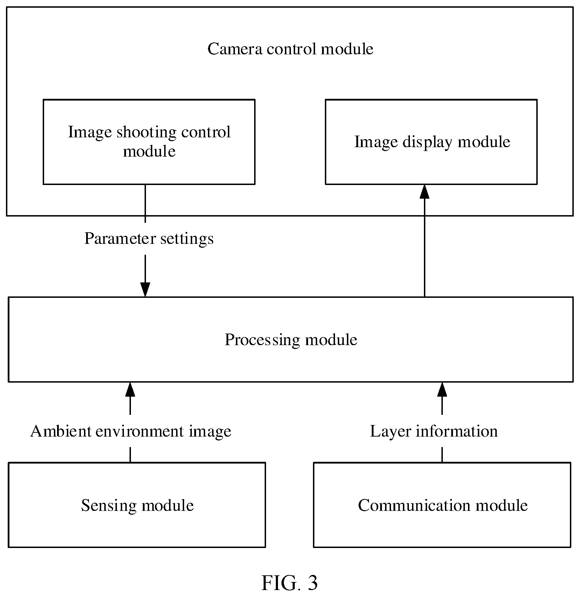

FIG. 3 is a block diagram of a system framework to which a navigation method is applicable according to an embodiment of this application. The system may be disposed in the mobile carrier 100 shown in FIG. 1. As shown in FIG. 3, the system includes a sensing module, a communication module, a camera control module, and a processing module. The camera control module includes an image shooting control module and an image display module. The sensing module may include one or more sensors in the sensing system 120 shown in FIG. 1. The sensor is, for example, an image shooting apparatus. The communication module may include one or more of the peripheral devices 140 shown in FIG. 1. The image display module may include one or more display apparatuses in the display apparatus 130 shown in FIG. 1. The processing module and the image shooting control module may include one or more processors in the computing platform 150 shown in FIG. 1. More specifically, the sensing module may be configured to obtain image information of a driving scenario, and the communication module is configured to send the image information obtained by the sensing module to a guiding party device, so that a guiding party user inputs guiding information based on the image information via the guiding party device. Further, the communication module may receive the guiding information from the guiding party device, and input the guiding information into the processing module. The processing module generates navigation information based on the guiding information, and inputs the navigation information into the image display module, so that the image display module displays the navigation information. For example, the guiding information may be an identifier or a location of a marked place selected by the guiding party user for the image information, and the identifier or the marked place may indicate a destination that the driver needs to reach. Alternatively, the guiding information may include a route drawn by the guiding party user for the image information, and the route is used to guide a guided party user to a destination that the guided party user needs to reach.

It should be understood that the foregoing modules and apparatuses are merely examples. In actual application, the foregoing modules and apparatuses may be added or deleted based on an actual requirement. In an example, the communication module and the processing module in the system architecture shown in FIG. 3 may be combined into one module, and the module is disposed in the computing platform shown in FIG. 1. In another example, the image shooting control module and the processing module may alternatively be combined into one module, that is, functions of the image shooting control module and the processing module are implemented by the one module. In still another example, a voice playing module may be added to play the navigation information.

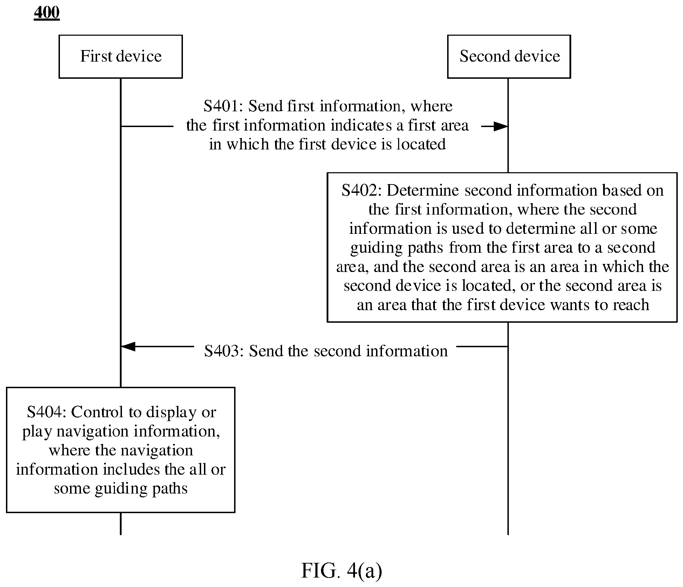

FIG. 4(a) is a schematic flowchart of a navigation method 400 according to an embodiment of this application. The method 400 may include the following steps.

S401: A first device sends first information to a second device, where the first information indicates a first area in which the first device is located.

In some possible implementations, the first device includes the mobile carrier 100 in the foregoing embodiment, and the second device may be the electronic device 200 in the foregoing embodiment.

In some possible implementations, the first device may alternatively include an in-vehicle terminal disposed in the mobile carrier 100, for example, a head unit; or the first device may alternatively include an electronic device associated with the mobile carrier 100, for example, an electronic device like a mobile phone associated with the mobile carrier 100. The foregoing "association" may include: an account logged in the electronic device and an account logged in the mobile carrier are the same; or an account logged in the electronic device and an account logged in the mobile carrier are different, but both accounts are accounts of an authorized user of a same mobile carrier; or an association relationship is established between the electronic device and the mobile carrier through a wireless communication technology or wired communication.

In some possible implementations, both the first device and the second device may be electronic devices, and types of the first device and the second device may be the same or different.

In some possible implementations, the first device may include the electronic device 200 in the foregoing embodiment, and the second device may include the mobile carrier 100 in the foregoing embodiment, or the second device may include an in-vehicle terminal in the mobile carrier 100 or an electronic device associated with the mobile carrier 100.

In some possible implementations, the first device and the second device may alternatively include a chip or a circuit in the foregoing mobile carrier or electronic device.

For example, the electronic device may include a terminal device like a mobile phone, a tablet computer, or a wearable device (for example, a watch or glasses).

In some possible implementations, the first device directly sends the first information to the second device; or the first device sends the first information to the second device via a server connected to the first device; or the first device sends the first information to the second device via a server connected to the second device; or the first device sends the first information to the second device via a server connected to the first device and a server connected to the second device.

In some possible implementations, the server connected to the first device and the server connected to the second device are a same server.

It should be noted that the foregoing "directly sending" may be understood as sending without being forwarded by another device or server.

In some possible implementations, before the first device sends the first information to the second device, the first device receives a first instruction, and obtains the first information based on the first instruction.

For example, the first instruction may include at least one of the following: an instruction generated by the first device in response to an operation of a user who uses the first device, for example, when the user who uses the first device controls the first device to communicate with the second device, the first device generates the first instruction; or an instruction generated by the second device in response to an operation of a user who uses the second device, for example, when the user who uses the second device controls the second device to communicate with the first device, the second device generates the first instruction, and sends the first instruction to the first device; or an instruction actively generated by the first device, for example, when the first device detects that navigation information is lacked in a current area, the first device may generate the first instruction, to obtain the first information.

For example, the first information may include at least one of the following: first image information, voice semantic information, and geographical location information. The first image information indicates an image of the first area, the voice semantic information is used to determine the first area, and the geographical location information indicates a location of the first area.

In some possible implementations, the first image information indicates a first image. For a method for obtaining the first image, refer to the following descriptions. In an example, when the first device is at least one of the mobile carrier 100, an in-vehicle terminal in the mobile carrier 100, or an electronic device associated with the mobile carrier 100, the first image information may be shot and processed by a camera of the mobile carrier 100. The camera includes but is not limited to a camera of a DMS, a camera of a CMS, a camera of a dashcam, or the like. In some possible implementations, the first image information may alternatively be obtained after being shot and processed by the first device. For example, when the first device is an electronic device like a mobile phone, the first image may be obtained after being shot and processed by a front-facing camera or a rear-facing camera of the electronic device. The camera mainly includes an optical lens, a photosensitive sensor, and an image processor. The optical lens is configured to focus light, and project an object in a field of view onto a surface of an imaging medium. The photosensitive sensor has an optical-to-electrical conversion function, and is configured to convert an optical image on a photosensitive surface into an electrical signal. The image processor is configured to process a received image signal into image data in a required format, so as to provide the image data for a device that has a requirement for the image data. The provided image data is the first image information. In still another example, the first image information may alternatively be generated based on a voice instruction. For example, if the first device detects a voice instruction "there is a tree on a right side in front of a location in which I am currently located", the first device may control, based on the information, to shoot an image of a road in front of the first device, and mark the tree on the right side in the image to generate the first image, where the first image information indicates the first image. In yet another example, the first image information may alternatively be generated based on historical data information. For example, if the user who uses the first device has visited the first area, the first image information may be generated or determined based on a location that is of the first area and that is recorded in the historical data information. For example, the first image information may be map information of the first area, or the first image may be a previously shot image that includes the first area and that is stored in the historical data information. The first image information indicates the first image. For example, the historical data information may be historical data information stored in the first device, or may be historical data information stored in a cloud server. This is not specifically limited in this embodiment of this application.

In some possible implementations, the voice semantic information may be generated based on a voice instruction entered by the user who uses the first device. For example, based on a voice instruction "I am currently located at an intersection of an xx road and a yy road, and there are two big trees in front of me on the left" input by the user who uses the first device, voice semantic information that can indicate that the first area is located at "an intersection of the xx road and the yy road, and there are two big trees in front of a current road" is obtained through parsing.

In some possible implementations, the geographical location information may be information generated based on a location selected by the user on an electronic map. Alternatively, if the historical data information stores the geographic location information of the first area, when the first device is located in the first area, the first device searches the historical data information for and determines the geographic location information of the first area.

In some possible implementations, when the first information is the first image information, the first image includes a first limiting area. The first limiting area indicates a range of a first operation performed by a user who uses the second device, and the first operation is used to generate second information. Before the first device sends the first image information, the first device obtains image shooting range information of a first sensor and display range information of a first display device, where the first sensor is configured to obtain an image for generating the first image information, and the first display device is configured to display the navigation information; and the first device determines the first limiting area based on the image shooting range information and the display range information. The first limiting area indicates the range of the first operation performed by the user who uses the second device. This helps the first device control the first display device to directly display a line, a text, a location of a marked place, an identifier, and the like that are included in the second information. Therefore, a delay in indicating the navigation information by the second device for the user who uses the first device is reduced, and navigation efficiency is further improved.

For example, the first sensor may be a camera. When the first device is a mobile carrier, the first sensor may be a camera disposed on the mobile carrier. A disposition location of the camera on the mobile carrier is not limited. The camera may be disposed outside or inside a cockpit of the mobile carrier. For example, the camera may include one or more of a camera of a DMS, a camera of a CMS, and a camera of a dashcam. The first display device may be an in-vehicle display or a projection display, for example, a HUD.

For example, the image shooting range information may include a first field of view (field of view, FOV) parameter of the first device, and the display range information may include a second FOV parameter of the first display device, so that the first limiting area is determined based on the first FOV parameter and the second FOV parameter.

In some possible implementations, the first limiting area is marked in the first image sent by the first device to the second device. In other words, the first information includes information used to mark or indicate the first limiting area.

S402: The second device determines the second information based on the first information, where the second information is used to determine all or some guiding paths from the first area to a second area, and the second area is an area in which the second device is located, or the second area is an area that the first device needs to reach.

For example, the "guiding path" in this embodiment of this application may be understood as a route that indicates a user from one place to another place.

For example, a place A and a place B need to be passed through on a way from the first area to the second area. In some possible implementations, that the second information is used to determine some guiding paths from the first area to the second area may include at least one of the following: the second information is used to determine a guiding path from the first area to the place A; or the second information is used to determine a guiding path from the first area to the place A and from the place A to the place B. That the second information is used to determine all guiding paths from the first area to the second area may include: The second information is used to determine all guiding paths from the first area to the place A, from the place A to the place B, and from the place B to the second area.

In some possible implementations, the second device displays, based on the first information, an image and a location of the first area to the user, or prompts the user to perform a related operation (for example, drawing a route or selecting an identifier), and determines the second information based on the first information and the first operation in response to the first operation performed by the user who uses the second device on the second device. Further, the first device may determine the all or some guiding paths from the first area to the second area based on the second information; or the first device may send the second information to the cloud server, and the cloud server determines the all or some guiding paths from the first area to the second area based on the second information.

In an example, the second information includes layer information. In response to the first operation, the second device records at least one of information such as a line, a text, a location of the marked place, and an identifier in the layer information, where the first operation includes but is not limited to: an operation of tapping a screen, an operation of sliding and drawing on a screen, and an operation of inputting a text. The marked place may be the second area, or a place that needs to be passed through to the second area. The line may be a doodle that is generated in response to the first operation and that indicates the all or some guiding paths from the first area to the second area. The text may be a text generated in response to the first operation. Optionally, the first operation may be an operation performed in the first area indicated by the first information.

The marked place indicates the second area or the place that needs to be passed through from the first area to the second area. The line and/or the text indicate/indicates the all or some guiding paths from the first area to the second area. The identifier may be a building or a reference object in the second area, or a building or a reference object that is passed through from the first area to the second area. For example, the reference object may be a plant (for example, a tree), a road sign, or another object. In some possible implementations, the marked place may be determined based on the identifier. For example, a location of the identifier is determined as the marked place. In some possible implementations, when the marked place indicates the place that needs to be passed through from the first area to the second area, the place may be a location at which a driving direction or a walking direction needs to be changed, for example, a location at which a turning is required. In a possible scenario, on the way from the first area to the second area, the intersection of the xx road and the yy road needs to be passed through, and there is a big tree beside the intersection. In this case, the "intersection of the xx road and the yy road" may be marked or determined as the marked place, and the "big tree" may be marked as the identifier. In some possible implementations, a location of the "big tree" may be determined as the marked place based on the "big tree", or the "intersection of the xx road and the yy road" is determined as the marked place based on the "big tree".

In another example, the second information includes path information from the first area to the second area. The second device searches the historical data information for a historical path from the first area to the second area based on the first information, and sends the historical path to the first device. For example, the historical data information may include historical data information stored in the second device, or may include historical data information stored in the cloud server. This is not specifically limited in this embodiment of this application.

In still another example, the second information includes voice semantic information. For example, the voice semantic information is generated based on a speech "turn left at a big tree on a left of a road ahead" input by the user who uses the second device. Further, after receiving the second information, the first device may determine the all or some guiding paths from the first area to the second area based on the second information. Alternatively, the first device may forward the second information to the cloud server, and the cloud server parses the voice semantic information, and determines the all or some guiding paths from the first area to the second area.

When the second information is voice semantic information, the first device may control to play the voice semantic information. In this case, the foregoing step in which the first device controls to display the navigation information may alternatively be a step in which the first device controls to play the voice semantic information. Alternatively, the first device may control to display the navigation information and play the voice semantic information.

In some possible implementations, the second device generates first indication information, where the first indication information indicates that the second information is generated based on the first image or indicates the first image; and the second device sends the first indication information to the first device. For example, the first information sent by the first device to the second device includes information about a sequence of images of consecutive frames. When displaying the sequence of images of consecutive frames, the second device detects a first input of the user who uses the second device. The second device determines that an image displayed when the first input is detected is the first image. The second information is information collected by a layer generated based on the first image. Further, the second device generates the first indication information. Based on the first indication information, the first device knows that guiding information included in the second information is generated for a specific image of the first area. Therefore, it is convenient for the first device to control, based on the first indication information, the image indicated by the first indication information, and the image that is of the first area and that is obtained by the first device in real time, to display the navigation information, so as to help improve precision of the displayed navigation information.

In some possible implementations, the first indication information may be included in the second information.

S403: The second device sends the second information to the first device.

In some possible implementations, the second device directly sends the second information to the first device; or the second device sends the second information to the first device via a server connected to the second device; or the second device sends the second information to the first device via a server connected to the first device; or the second device sends the second information to the first device via a server connected to the second device and a server connected to the first device.

S404: The first device controls to display or play the navigation information, where the navigation information includes the all or some guiding paths.

For example, that the first device controls to display the navigation information may include but is not limited to: The first device displays the navigation information; the first device controls a central control screen of the mobile carrier to display the navigation information; the first device controls a HUD to display the navigation information; and the first device controls another display in the mobile carrier to display the navigation information.

In some possible implementations, the first device generates the navigation information based on the second information, to control to display the navigation information. The navigation information includes but is not limited to one or more of the following information: a navigation route, a marked place, and a distance between the marked place and the first area.

For example, the navigation route may include the all or some guiding paths.

For example, the method for generating the navigation information based on the second information may include: when the second information is the voice semantic information, determining a marked place based on the voice semantic information, determining a distance between the marked place and the first area based on the marked place, and generating a guiding path from the first area to the marked place; or when the second information is the layer information, determining the marked place based on the line, the text, the location of the marked place, the identifier, or the like included in a layer, determining a distance between the marked place and the first area based on the marked place, and generating a guiding path from the first area to the marked place.

In some possible implementations, the first device may determine a specific location of the marked place and a distance between the marked place and the first area with reference to a high-precision map.

For example, after determining the marked place, the first device processes a shot image including the marked place, to determine the distance between the marked place and the first area.

In some possible implementations, after the location of the first device changes, a distance between the changed location and the marked place may be further determined based on the marked place.

In some possible implementations, the first device controls to display the navigation information on a basis of a second image, where the second image is an image generated based on the second information.

In an example, that the second image is generated based on the second information may include: The first device obtains an electronic map of a current location of the first device, determines a location of the marked place on the electronic map based on the second information, and generates the second image based on the location of the marked place on the electronic map and the first area, where the second image is an electronic map including the marked place and the first area. Further, the first device controls to display the navigation information on the basis of the second image.

In some possible implementations, the first device controls to display the navigation information on a basis of a third image, where the third image is an image generated based on an image of the first area. The image of the first area may include a road image of the first area in which the first device is located.

In an example, the first device is disposed in the mobile carrier, or is associated with the mobile carrier, and the first device controls the HUD to display the navigation information. In this case, the third image may be an image generated based on the image of the first area. The HUD projects the third image, so that a road surface seen from a driving angle of view of the mobile carrier coincides with the third image. Further, the first device controls to display the navigation information on the basis of the third image.

In another example, that the third image is generated based on an image of the first area may include: The third image is generated based on the first image and the image of the first area. For example, the first device is disposed in the mobile carrier, or is associated with the mobile carrier, and the first device controls the central control screen to display the navigation information. After receiving the second information, the first device obtains the road image (that is, the image of the first area), determines a relationship between the road image and the first image based on the first indication information, and processes the road image based on the relationship between the road image and the first image to generate the third image, where the third image includes the marked place. The "relationship between the road image and the first image" may represent a location change of the first device, and "processing the road image" may include but is not limited to: pruning, stretching, and performing distortion correction on the road image. Further, the first device controls to display the navigation information on the basis of the third image.

In still another example, the second information includes the layer information, and the line and/or the marked place included in the layer information may be considered as the all or some guiding paths from the first area to the second area. That the first device controls to display the navigation information on the third image may include: The first device controls to display, on the third image, the layer information or the line and/or the marked place included in the layer information.

In some possible implementations, the first device controls to display the navigation information on a basis of a fourth image, where the fourth image is an image generated based on the second information and the image of the first area.

In an example, that the fourth image is generated based on the second information and the image of the first area may include: After determining the location of the marked place based on the second information, the first device obtains a road image (that is, the image of the first area) including the marked place, and processes the road image based on the location of the marked place in the road image to generate the fourth image, where the fourth image includes the marked place. For example, the "processing the road image" may include but is not limited to: pruning, stretching, and performing distortion correction on the road image. Further, the first device controls to display the navigation information on the basis of the fourth image.

In still another example, that the fourth image is generated based on the second information may include: After determining the location of the marked place based on the second information, the first device obtains a plurality of road images, and performs processing like splicing and cropping on the plurality of road images, to generate the fourth image including the marked place. Further, the first device controls to display the navigation information on the basis of the fourth image.

In some possible implementations, when duration for which the first device controls to display the navigation information is greater than or equal to a preset threshold; and/or the first device passes through a road section indicated by the all or some guiding paths; and/or the first device arrives at the second area, the first device controls to stop displaying the navigation information.

For example, the preset threshold may be 2 seconds, or may be 3 seconds, or may be other duration.

In some possible implementations, when the first device receives new second information or receives a new guiding path, the first device controls to display new navigation information.

In some possible implementations, the first device may control to store the all or some guiding paths from the first area to the second area in the first device.

In an example, the first device may control, based on the first area or the second area, to store the all or some guiding paths in the first device and/or the cloud server. That the all or some guiding paths are stored based on the first area or the second area may be understood as: The all or some guiding paths are associated with the first area or the second area. Further, when the first device is located in the first area or the second area again, the all or some guiding paths may be recommended for the first device. In some possible implementations, the first device may control to store the all or some guiding paths in the cloud server based on the first area or the second area, so that when another device is located in the first area or the second area, the another device may recommend the all or some guiding paths to a user who uses the another device.

In another example, the first device may control, based on identity information of a user, to store the all or some guiding paths in the first device and/or the cloud server. The user may include the user who uses the first device and/or the user who uses the second device. That the all or some guiding paths are stored based on the identity information of the user may be understood as: The all or some guiding paths are associated with the identity information of the user. Further, when the user logs in to another device based on the identity information, the another device may recommend the all or some guiding paths to the user. For example, the identity information of the user includes but is not limited to biometric feature information, an account, and the like. The biometric feature information includes but is not limited to fingerprint information, palmprint information, facial information, iris information, and gait information. The account may include account information for logging in to a device, and the like.

In some possible implementations, when the user who uses the first device holds the first device and needs to walk to a destination, after receiving the second information from the second device, the first device may control to display the navigation information, so that the user who uses the first device walks from the first area to the second area based on the navigation information.

According to the navigation method provided in this embodiment of this application, a user who uses a second device and who is already at a destination or is familiar with a location of the destination can be assisted to guide a user who uses a first device, so as to improve communication efficiency between the user who uses the second device and the user who uses the first device, and help the user who uses the first device quickly reach the destination. In particular, on a road without map support or navigation information, navigation information can be provided, with assistance of the second device, for the user who uses the first device, so that experience of the user who uses the first device is improved.

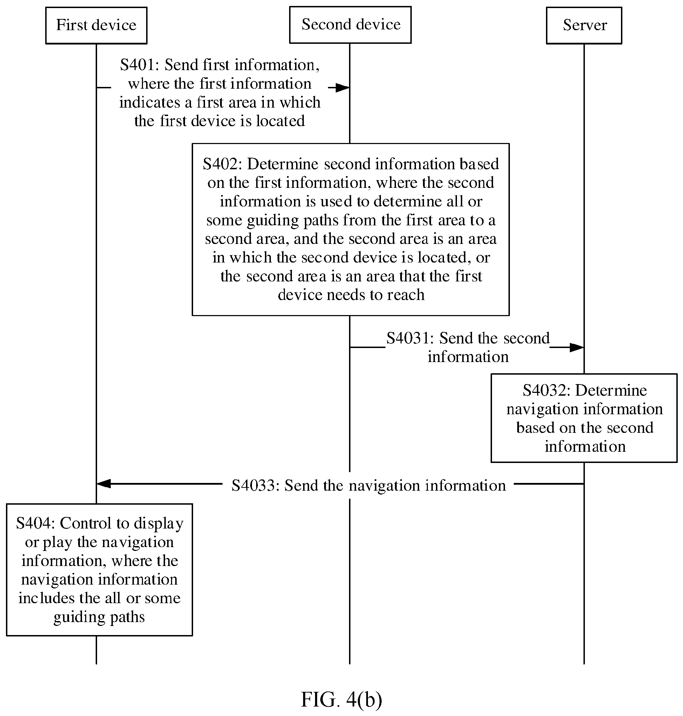

In some possible implementations, in the method 400, after S402 is performed, S4031 to S4033 shown in FIG. 4(b) may be performed, and then S404 is performed. Details are as follows:
S4031: The second device sends the second information to a server.

For example, the server may be a server connected to the first device and/or a server connected to the second device in the foregoing embodiments.

S4032: The server determines navigation information based on the second information.

In some possible implementations, the server generates the navigation information based on the second information.

For example, the second information includes path information from the first area to the second area. For example, the path information may be a line included in the layer information, or may be a historical path that is from the first area to the second area and that is found by the second device in the historical data information based on the first information, and the server generates the navigation information based on the path information from the first area to the second area.

In some possible implementations, the server may further obtain the first information, to generate the navigation information based on the first information and the second information. For example, when the second information is voice semantic information, the server determines the marked place based on the voice semantic information, and then generates the navigation information based on the marked place and the first area indicated by the first information, that is, generates a guiding path from the first area to the marked place, or may further determine a distance between the marked place and the first area. When the second information is layer information, the server determines the marked place based on a line, a text, a location of the marked place, an identifier, or the like included in a layer, and then generates the navigation information based on the marked place and the first area indicated by the first information, that is, generates a guiding path from the first area to the marked place, or may further determine a distance between the marked place and the first area. In some possible implementations, the server may determine a specific location of the marked place with reference to a high-precision map, and generate the navigation information based on the specific location of the marked place and the first area indicated by the first information.

S4033: The server sends the navigation information to the first device.

In this embodiment of this application, the server determines the navigation information, and sends the navigation information to the first device for displaying. This helps reduce calculation complexity of the first device, and reduces energy consumption required in a process in which the first device displays the navigation information.

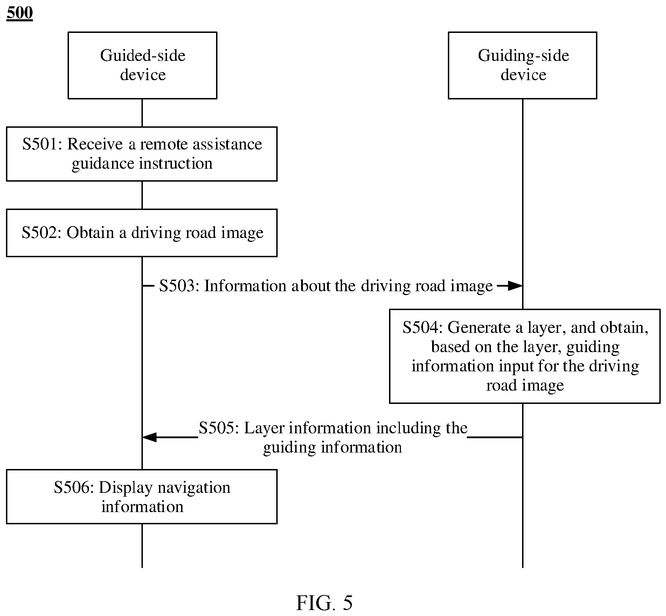

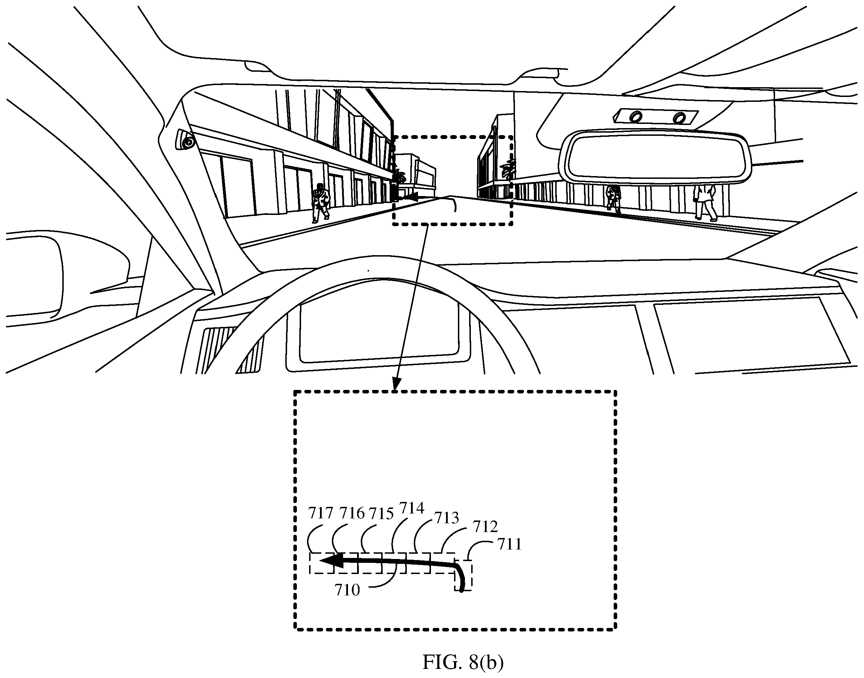

An example in which the first information is a first image is used below to describe in detail, with reference to FIG. 5 to FIG. 8(a) and FIG. 8(b), a navigation method provided in an embodiment of this application.

FIG. 5 is a schematic flowchart of a navigation method 500 according to an embodiment of this application. The method 500 may include the following steps.

S501: A guided-side device receives a remote assistance guidance instruction.

For example, the first device in the method 400 may include the guided-side device, and the second device in the method 400 may include a guiding-side device.

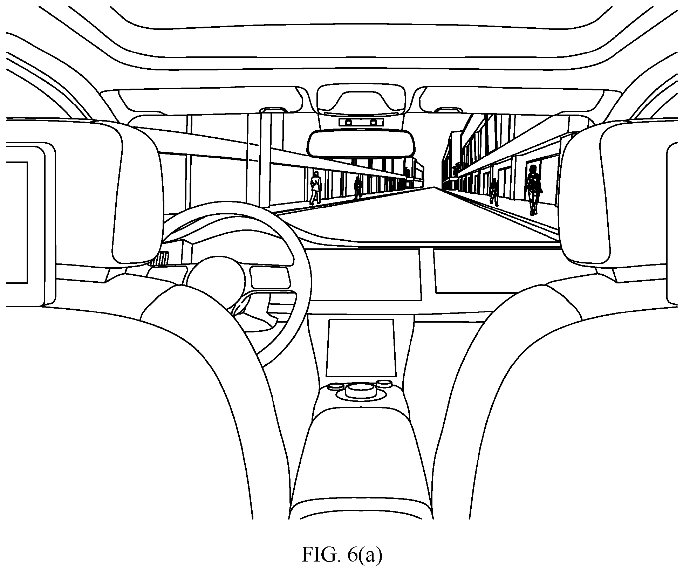

In some possible implementations, when a guided-side user reaches a road section without a navigation route, as shown in FIG. 6(a), the guided-side user cannot determine a route to a destination, and may determine the route to the destination according to the method 500.

It should be understood that in this embodiment of this application, the "guided-side user" includes a user who uses the guided-side device, and a "guiding-side user" includes a user who uses the guiding-side device.

For example, the first instruction in the method 400 may include the remote assistance guidance instruction.

It should be understood that the remote assistance guidance instruction instructs the guided-side device to start a route guidance procedure.

For example, the guided-side device communicates with the guiding-side device through a video call application (application, APP). In some possible implementations, when the guided-side device establishes a communication relationship with the guiding-side device, the guiding-side device sends a remote assistance guidance instruction to the guided-side device, or a computing platform of the guided-side device sends a remote assistance guidance instruction to a control module of the guided-side device; or when the guided-side device establishes a communication relationship with the guiding-side device, the guiding-side device sends a remote assistance guidance instruction to the guided-side device in response to an operation of the guiding-side user; or when the guided-side device establishes a communication relationship with the guiding-side device, a computing platform of the guided-side device sends a remote assistance guidance instruction to a control module of the guided-side device in response to an operation of the guided-side user.

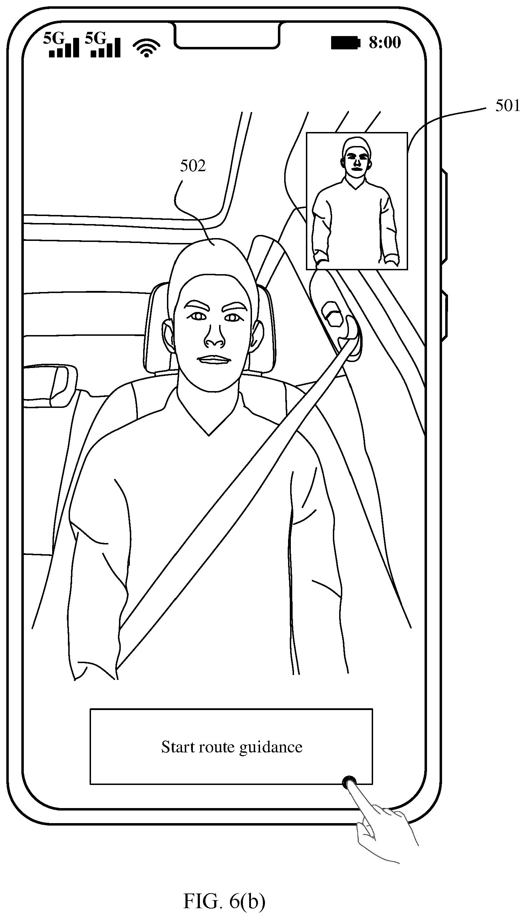

For example, after the guiding-side device establishes communication with the guided-side device through the video call APP, the guiding-side device displays an interface shown in FIG. 6(b). A block 501 may be a video interface of the guiding-side user, and a block 502 may be a video interface of the guided-side user. The guiding-side user may tap "start route guidance", to trigger the guiding-side device to send the remote assistance guidance instruction to the guided-side device. In another example, the interface may alternatively be an audio interface.

S502: The guided-side device obtains a driving road image.

For example, the guided-side device may obtain one or more driving road images from a camera of a dashcam based on the remote assistance guidance instruction, or may obtain one or more driving road images from another camera.

In some possible implementations, a specific camera that is used to obtain the driving road image may be set by default by a system, or may be determined in response to selection of the guided-side user. This is not specifically limited in this embodiment of this application.

In a specific implementation process, the guided-side device may obtain a video stream instead of a single image from the camera. It should be understood that the video stream may be understood as a sequence of images of consecutive frames. In other words, one video stream includes a plurality of images.

In some possible implementations, the guided-side device obtains an FOV parameter of a HUD and an FOV parameter of a camera used to shoot a driving road image. Further, the guided-side device sets a limiting box in the driving road image based on the FOV of the HUD and the FOV of the camera. The limiting box indicates a display range of the HUD. In other words, content in the limiting box can be displayed through the HUD.

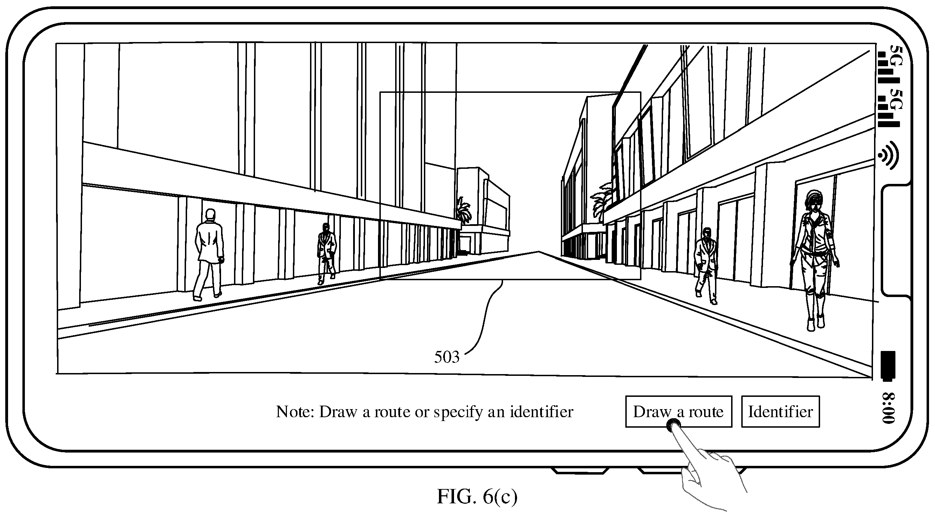

For example, a horizontal field of view (horizontal field of view, HFOV) of the HUD is 23 degrees (degrees, °), a vertical field of view (vertical field of view, VFOV) of the HUD is 5°, and a diagonal field of view (diagonal field of view, DFOV) of the camera that obtains the driving road image is 130 degrees. In this case, an HFOV and a VFOV of the camera may be determined based on the DFOV. Further, a limiting box 503 shown in FIG. 6(c) is set in the driving road image based on the HUD and the HFOV and the VFOV of the camera. For example, the first limiting area in the method 400 may include an area in the limiting box 503.

S503: The guided-side device sends information about the driving road image to the guiding-side device.

In some possible implementations, the information that is about the driving road image and that is sent by the guided-side device to the guiding-side device may include information about the limiting box, or may not include information about the limiting box. This is not specifically limited in this embodiment of this application.

In some possible implementations, when sending information about the plurality of driving road images to the guiding-side device, the guided-side device may generate an identification for each driving road image, to mark the driving road image.

S504: The guiding-side device generates a layer, and obtains, based on the layer, guiding information input for the driving road image.

For example, the guiding information indicates a route to the destination. A specific form of the guiding information may be a line, or may be a selected identifier, or may be a location of a selected marked place, or may be another form. This is not specifically limited in this embodiment of this application. More specifically, the identifier may be a building at the destination, or may be a building or a reference object that is passed through from a current area to the destination. For example, the reference object may be a plant (for example, a tree), a road sign, or another object. This is not specifically limited in this embodiment of this application.

For example, the guiding-side device generates a layer based on the driving road image, and the guiding-side user may draw a route and/or specify an identifier on the layer for the driving road image, to guide the guided-side user to the destination. It should be understood that a size of the layer may be the same as or different from a size of the driving road image.

In some possible implementations, the layer generated based on the driving road image carries the identification of the driving road image.

For example, the guiding-side device may prompt, in a form of voice, text, or the like, the guiding-side user to draw a route, or specify an identifier. In an example, as shown in FIG. 6(c), the user is prompted by a text. Further, after the guiding-side user taps "Draw a route", the user may draw a guidance route at the layer.

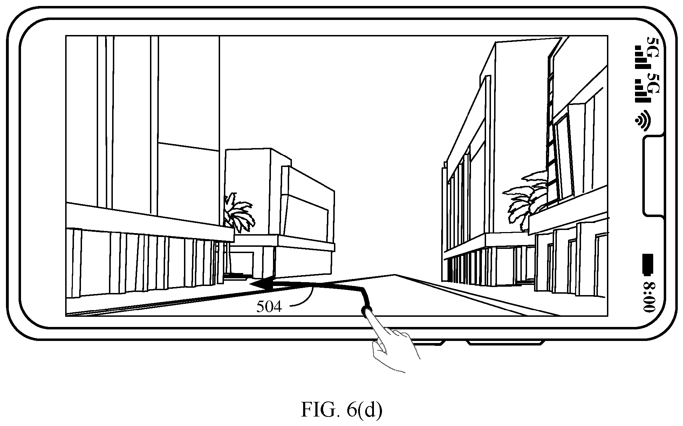

It should be understood that the guiding-side device may zoom in or zoom out the driving road image in response to an operation of the guiding-side user. For example, if the guiding-side user needs to draw a route in the limiting box 503, the guiding-side device may zoom in the image to a size shown in FIG. 6(d) in response to the operation of the guiding-side user. Further, a line 504 drawn by the guiding-side user is obtained via the guiding-side device, and the line is stored in the layer.

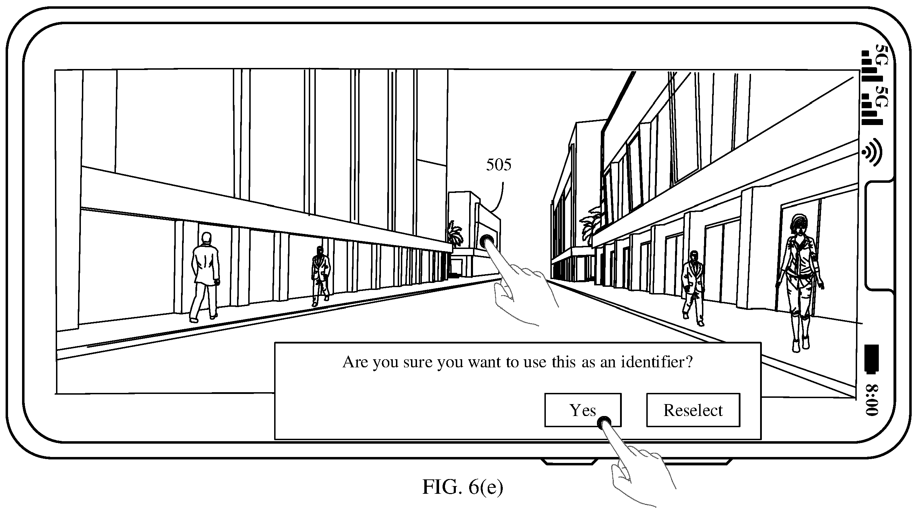

In some possible implementations, the guiding-side user may perform route guidance in a manner of selecting a specific identifier. In this case, in response to the selection of the user, the guiding-side device may mark, as an identifier, a building or a reference object tapped by the guiding-side user. As shown in FIG. 6(e), when the guiding-side user taps a building 505, the guiding-side device records the building as an identifier in the layer.

In some possible implementations, after detecting a screen tapping operation, the guiding-side device may prompt "Are you sure you want to use this as an identifier?" Further, after detecting an operation of tapping an "OK" button by the guiding-side user, the guiding-side device may store, in the layer, the identifier entered by the guiding-side user.

In some possible implementations, the guiding-side user may further perform route guidance in a manner of selecting a location of a specific marked place. In this case, in response to the selection of the user, the guiding-side device may mark a location tapped by the guiding-side user as the marked place. For example, if the guiding-side user taps a location at an intersection near the building 505, the guiding-side device records, at the layer, the location as the location of the marked place.

In some possible implementations, after the guiding-side user selects the identifier and the location of the marked place, the user may further enter a text, for example, "turn left at the identifier" or "turn left at the marked place". In this way, the guided-side device determines the navigation information based on the identifier or the location of the marked place and text information.

It should be understood that graphical user interfaces (graphical user interfaces, GUIs) shown in FIG. 6(b) to FIG. 6(e) are merely examples for description. In a specific implementation process, the GUI may be in another form. This is not specifically limited in this embodiment of this application.

In some possible implementations, image recognition may be performed based on a doodle drawn by the guiding-side user, to match a similar graph. For example, if an arrow of the doodle drawn by the guiding-side user is irregular, a regular arrow may be matched; or if a line drawn by the guiding-side user is curved, a smooth line may be matched.

In some possible implementations, a control for drawing a route may be provided for the guiding-side user. After selecting the control by tapping, the user draws the route through the control.

S505: The guiding-side device sends the layer information including the guiding information to the guided-side device.

For example, the second information in the method 400 may include the layer information including the guiding information.

In some possible implementations, when the layer includes new guiding information, the guiding-side device sends the layer information including the guiding information to the guided-side device.

In some possible implementations, if the guided-side device sends a plurality of driving road images to the guiding-side device, the layer information carries the identification of the driving road image; or after sending, to the guided-side device, the layer information including the guiding information, the guiding-side device sends, to the guided-side device, the identification of the driving road image associated with the layer information, so that the guided-side device knows a driving road image for which guiding information included in the layer is generated.

For example, the first indication information in the method 400 may include the identification of the driving road image.

In some possible implementations, the guiding-side device sends, to the guided-side device at a specific time interval, the layer information including the guiding information. For example, the specific time interval may be 10 milliseconds, or 50 milliseconds, or may be another time interval.

For example, if the guiding-side device sends the layer information including the guiding information to the guided-side device at a specific time interval, the guiding-side device generates a new layer at the specific time interval, to obtain the guiding information.

In some possible implementations, when a pressure sensor of the guiding-side device detects no pressure signal within specific duration, the layer including the guiding information is sent to the guided-side device. For example, the specific duration may be 200 milliseconds, or may be 500 milliseconds. This is not specifically limited in this embodiment of this application. For example, before the pressure sensor on the guiding-side detects a pressure signal within specific duration, the pressure signal detected by the pressure sensor is a continuous pressure signal (for example, a signal generated when a finger slides on a screen), or may be a discontinuous pressure signal (for example, a signal generated when a finger taps a screen). This is not specifically limited in this embodiment of this application.

S506: The guided-side device displays the navigation information.

For example, the guided-side device determines and displays the navigation information based on the guiding information included in the layer. The navigation information may include but is not limited to one or more of the following information: the navigation route, the marked place, and the distance between the marked place and the guided-side device.

In some possible implementations, the navigation information includes the received guiding information. For example, after receiving the layer information including the guiding information, the guided-side device may directly superimpose the layer on a current road image, or directly display the layer through a HUD, to display the guiding information.

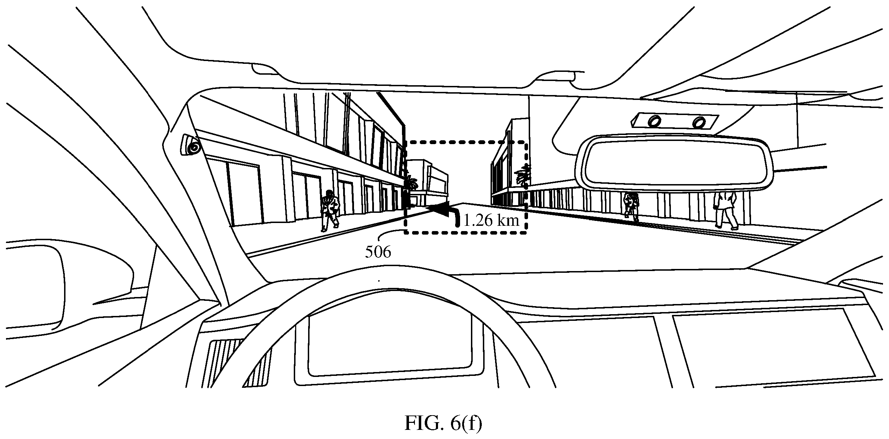

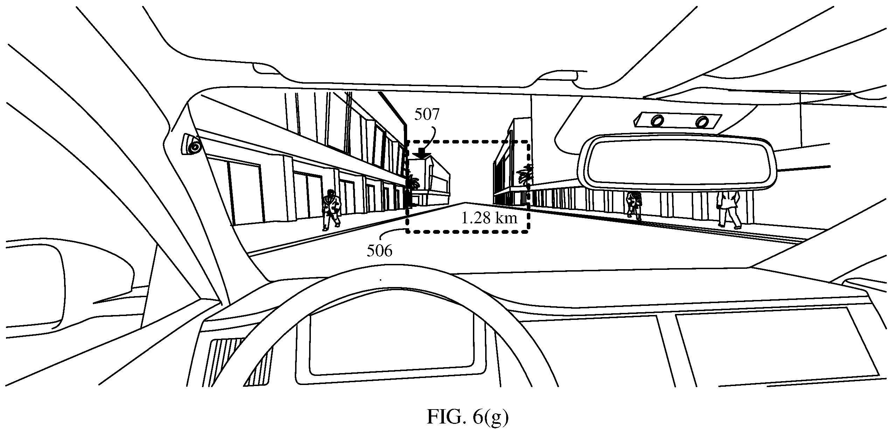

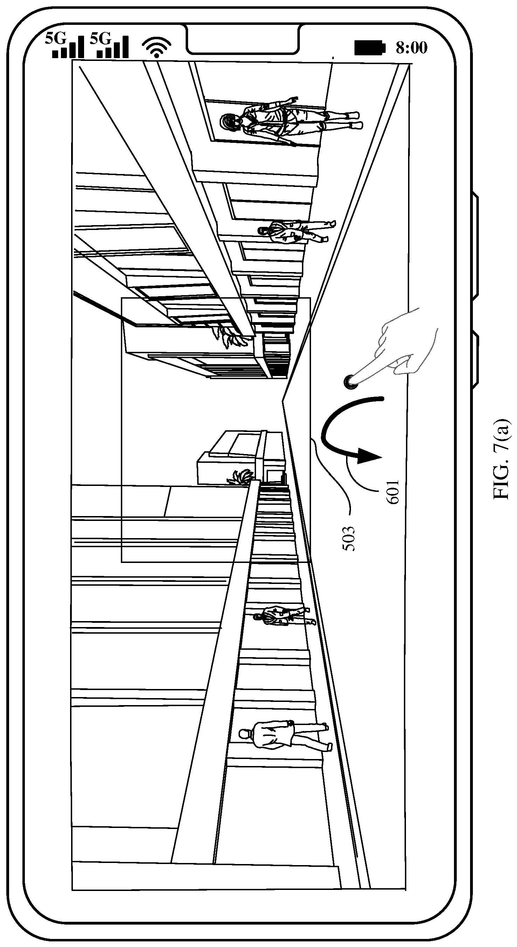

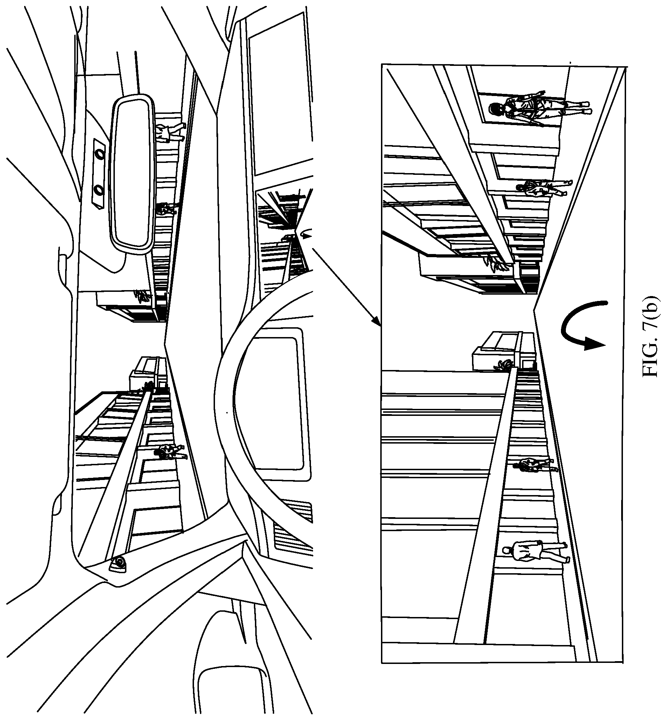

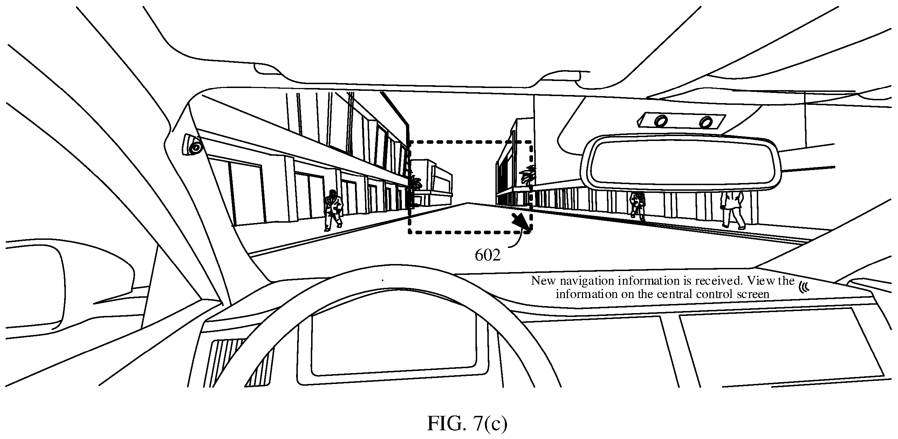

In an example, the guided-side device may determine, with reference to the driving road image corresponding to the layer, whether the guiding information is outside the limiting box. If the guiding information is not outside the limiting box, content in the limiting box in the layer may be directly displayed in the HUD, which is specifically shown in FIG. 6(f) and FIG. 6(g). A box 506 is a HUD display area. If the guiding information is outside the limiting box, for example, as shown in FIG. 7(a), if a line 601 input by the guiding-side user is outside the limiting box 503, the line 601 may be displayed through another display apparatus. For example, current road information and the layer are displayed through a central control display, as shown in FIG. 7(b). In some possible implementations, a specific display apparatus or display apparatuses that is/are used to display the guiding information may be determined in response to selection of the guided-side user. In some possible implementations, if the navigation information cannot be completely displayed through the HUD, an arrow 602 shown in FIG. 7(c) may be displayed in the HUD, to prompt the user that information is not completely displayed. Alternatively, the user may be prompted, with reference to a voice broadcast system, that "New navigation information is received. View the information on the central control screen".

More specifically, after receiving the layer information including the guiding information, the guided-side device determines the driving road image corresponding to the layer. For example, the driving road image corresponding to the layer may be determined based on the identification of the driving road image. Further, the guided-side device obtains the current road image, adjusts a size of the layer based on a proportional relationship between a feature object in the current road image and the driving road image, and determines a location of the guiding information in the layer in the current road image.

In another example, the guided-side device may further determine the marked place based on the guiding information. For example, the marked place may be a location that turning needs to be performed and that is determined based on a line (for example, a doodle), or may be a location of the identifier marked by the guiding-side user. Further, a distance between the marked place and the guided-side device is determined based on a location of the marked place on the current road image, and the guided-side device is notified of the distance through the HUD or another method. For example, "1.26 km" shown in FIG. 6(f) indicates that a distance between a location at which turning left is performed and the guided-side device is 1.26 km. For another example, "1.28 km" shown in FIG. 6(g) indicates that a distance between an identifier indicated by a mark 507 and the guided-side device is 1.28 km.

In still another example, the guiding information included in the layer is information about a location of the identifier, and the guided-side device may generate a mark based on the information about the location of the identifier and display the mark, for example, the mark 507 shown in FIG. 6(g).

In some possible implementations, after receiving the layer information including the guiding information, the guided-side device determines the navigation information based on the guiding information and the driving road image that are included in the layer, and displays the navigation information through a display apparatus, and/or broadcasts the navigation information through a voice system.

In an example, after receiving the layer including the guiding information, the guided-side device determines the driving road image corresponding to the layer. Further, a direction indicated by the guiding information (for example, a line) in the layer and/or a marked place indicated by the guiding information is identified. Further, the navigation information is generated based on the guiding information. For example, if it is determined, based on the guiding information, to turn left at 1.26 km in front, "turn left at 1.26 km in front" may be displayed through the display apparatus, and/or a voice instruction "turn left at 1.26 km in front" is generated and broadcast.

It should be understood that, as the location of the guided-side device moves, the navigation information may be controlled to change accordingly, for example, tracking and displaying of the marked place is controlled, and a change of the distance between the marked place and the guided-side device is controlled.

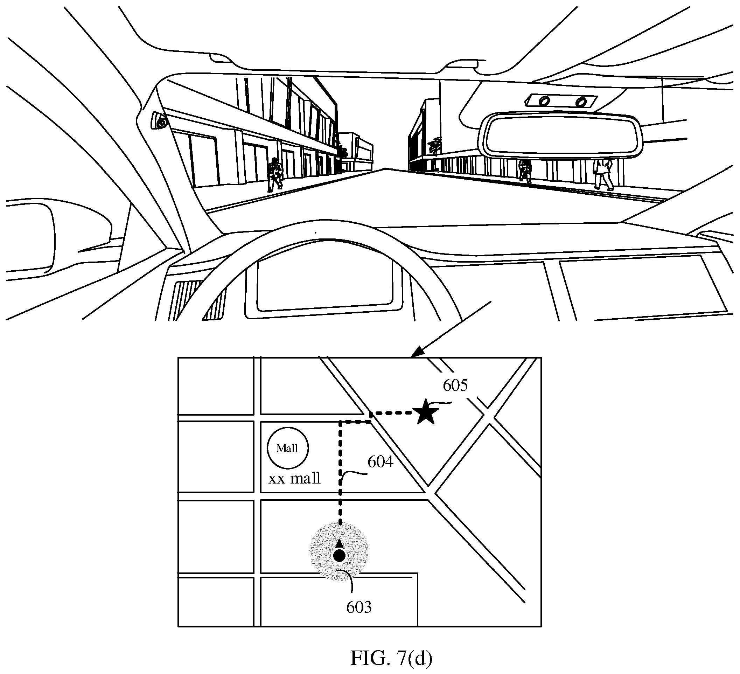

In some possible implementations, the marked place is determined with reference to a high-precision map based on the guiding information, so as to generate an electronic map image including the marked place, and the electronic map image and navigation information is displayed through the display apparatus. FIG. 7(d) is a generated electronic map image. The image includes a current location 603 of the guided-side device, a marked place 605 determined based on the guiding information, and a navigation route 604 that is determined based on the guiding information and that is from the current location 603 of the guided-side device to the marked place 605. It should be understood that, in some possible implementations, the electronic map image may further include a distance between 603 and 605. It should be noted that the electronic map image may be generated by a cloud server, or may be generated by the guided-side device. This is not specifically limited in this embodiment of this application.

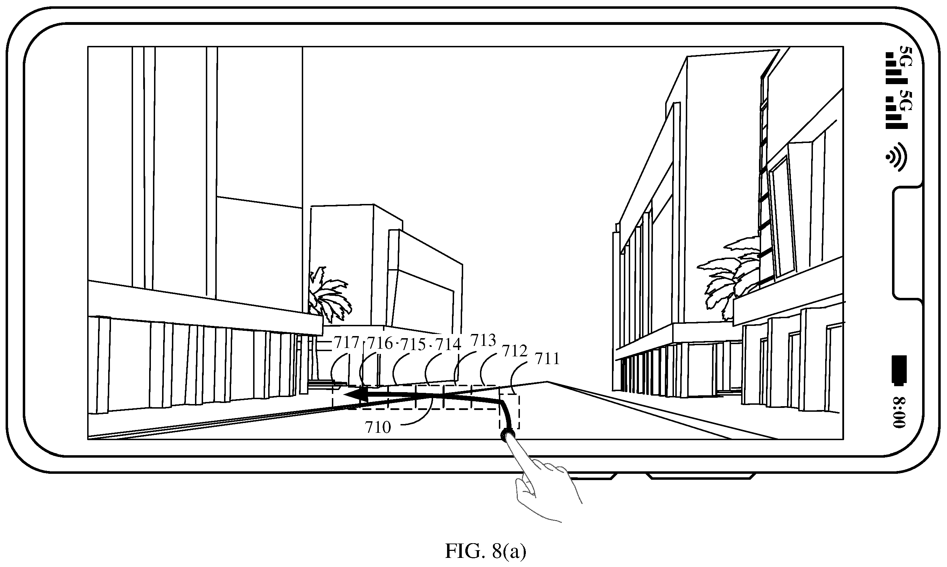

In some possible implementations, the guiding-side device sends, to the guided-side device at a specific time interval, a layer including the guiding information, where each layer includes some pieces of sub-guiding information, and a plurality of pieces of sub-guiding information may form one piece of completed guiding information. As shown in FIG. 8(a), the guiding-side device sequentially generates sub-guiding information 711 to sub-guiding information 717 based on a detected touch signal, and the guiding-side device separately sends the sub-guiding information 711 to the sub-guiding information 717 to the guided-side device, where the sub-guiding information forms complete guiding information 710. After receiving the sub-guiding information, the guided-side device sequentially displays the sub-guiding information through a display apparatus, as shown in FIG. 8(b). It should be understood that, from a perspective of a visual effect, it may be experienced that the guiding information 710 shown in FIG. 8(b) is "drawn in sequence".

For example, a scenario shown in FIG. 8(a) and FIG. 8(b) may be applicable to a condition in which the guided-side device is stationary or a moving speed is lower than a specific threshold. For example, the specific threshold may be 5 km/h, 10 km/h, or another value.

For example, before sequentially displaying the sub-guiding information, the guided-side device may obtain the current road image, determine a pixel similarity between the current road image and the driving road image, and may directly display the sub-guiding information when the pixel similarity is greater than or equal to a preset threshold. For example, a value of the pixel similarity may be any value between 0 and 1, where "1" indicates that the current road image is completely the same as the driving road image. The preset threshold may be 0.95, or may be 0.9, or may be another threshold. This is not specifically limited in this embodiment of this application.

In some possible implementations, the sub-guiding information that forms the complete guiding information may be generated for different driving road images. For example, the guided-side device sends a first image sequence to the guiding-side device, where the first image sequence includes a driving road image 1 to a driving road image 7, and the sub-guiding information 711 to 717 may be separately generated for the driving road image 1 to the driving road image 7. For example, the guided-side device sends the driving road image 1 to the guiding-side device, sends the driving road image 2 in a process of receiving and/or displaying the sub-guiding information 711, and sends the driving road image 3 in a process of receiving and/or displaying the sub-guiding information 712. The rest may be deduced by analogy. It should be understood that, because duration required for data transmission is at a millisecond level, from a perspective of a visual effect, it may be experienced that the guiding information 710 shown in FIG. 8(b) is "drawn in sequence".

In some possible implementations, when the navigation information is displayed through the HUD, transparency of the navigation information may be set, to reduce blocking of the navigation information from a line of sight.

In some possible implementations, display duration of the navigation information may be set, for example, 2 seconds, 3 seconds, or other duration. When the display duration of the navigation information is sufficient, the navigation information is controlled to be closed; or the navigation information may be closed by performing an operation of the guided-side user.

In some possible implementations, when the guided-side device arrives at the destination, or when the guided-side device passes through the road section indicated by the navigation information, displaying of the navigation information is stopped.

In some possible implementations, when the guided-side device receives the layer information including the new guiding information, the guided-side device prompts, through the voice system and/or the display apparatus, the user of the guided-side device that there is new navigation information, and controls the display apparatus to display the new navigation information. Alternatively, when the guided-side device receives the layer including the new guiding information after receiving the layer including the guiding information for a period of time, the guided-side device prompts, through the voice system and/or the display apparatus, the guided-side user that there is new navigation information, and controls the display apparatus to display the new navigation information. For example, the "period of time" may be duration greater than or equal to a preset time threshold, and the preset time threshold may be 1 minute, 2 minutes, or other duration. In some possible implementations, the navigation route may include the all or some guiding paths in the method 400. For example, as shown in FIG. 7(d), in an implementation, the marked place 605 is a location that needs to be passed through when the guided-side device travels from the current location 603 (the first area) to the destination (the second area), and the navigation route 604 may be understood as some guiding paths from the first area to the second area. In another implementation, the marked place 605 is the destination (the second area) of the guided-side device, and the navigation route 604 may be understood as all guiding paths from the first area to the second area.

According to the navigation method provided in this embodiment of this application, a user who is already at a destination or is familiar with a location of the destination can be assisted to guide a user who needs to go to the destination, so as to improve communication efficiency between the two users, and help guide the user who needs to go to the destination to quickly arrive at the destination. On a road without map support or navigation information, the method can improve communication efficiency between a guiding-side user and a guided-side user, and further store corresponding information in an electronic device, a mobile carrier, or a cloud server, to further improve efficiency in subsequent use.

FIG. 5 to FIG. 8(a) and FIG. 8(b) describe a navigation method provided in an embodiment of this application by using an example in which a guided-side device is a mobile carrier and a guiding-side device is an electronic device. It should be understood that the foregoing guided-side device may alternatively be an electronic device, and/or the guiding-side device may alternatively be a mobile carrier.

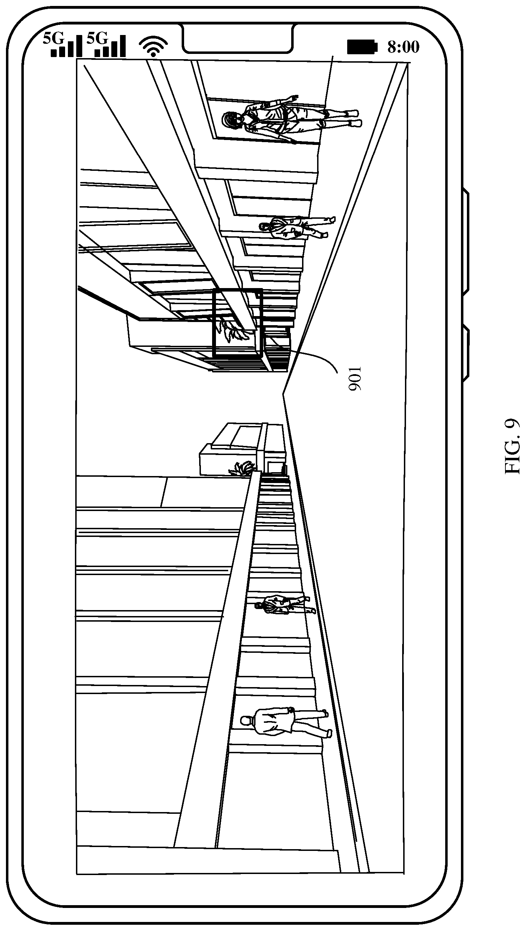

In some possible implementations, a user on the mobile carrier side may alternatively indicate a marked place for a user on the electronic device side. For example, when the user on the mobile carrier side drives to a road section shown in FIG. 6(a), a road image is obtained, and the user on the mobile carrier side may select a big tree on a right side in the image, to indicate a marked place for the user on the electronic device side. For example, the electronic device may display the marked place 901 as shown in FIG. 9, to guide the user on the electronic device side to go to the marked place. In some possible implementations, the electronic device may generate a navigation route between the location of the electronic device and the marked place 901 based on the marked place 901.

In various embodiments of this application, unless otherwise stated or there is a logic conflict, terms and/or descriptions in each embodiment are consistent and may be mutually referenced, and technical features in different embodiments may be combined based on an internal logical relationship thereof, to form a new embodiment.

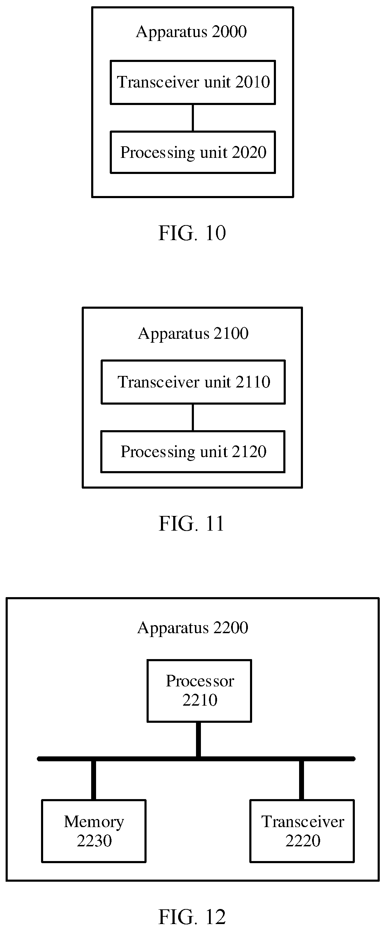

The foregoing describes in detail the method provided in embodiments of this application with reference to FIG. 4(a) and FIG. 4(b) to FIG. 9. The following describes in detail an apparatus provided in an embodiment of this application with reference to FIG. 10 to FIG. 12. It should be understood that descriptions of apparatus embodiments correspond to the descriptions of the method embodiments. Therefore, for content that is not described in detail, refer to the foregoing method embodiments. For brevity, details are not described herein again.

FIG. 10 is a block diagram of a navigation apparatus 2000 according to an embodiment of this application. The apparatus 2000 may be disposed in the electronic device 200 in the foregoing embodiment, or may be disposed in the mobile carrier 100 in the foregoing embodiment, or may be disposed in an electronic device associated with the mobile carrier 100.

The apparatus 2000 may include: a transceiver unit 2010, configured to: send first information to a second device, where the first information indicates a first area in which a first device is located; and receive second information from the second device, where the second information is used to determine all or some guiding paths from the first area to a second area, and the second area is an area in which the second device is located, or the second area is an area that the first device needs to reach; and a processing unit 2020, configured to control to display or play navigation information, where the navigation information includes the all or some guiding paths.

Optionally, the first information includes first image information, and the first image indicates a first image of the first area.

Optionally, the first image includes a first limiting area, the first limiting area indicates a range of a first operation performed by a user who uses the second device, and the first operation is used to generate the second information.

Optionally, the apparatus 2000 further includes an obtaining unit, configured to obtain image shooting range information of a first sensor and display range information of a first display device, where the first sensor is configured to obtain an image for generating the first image information, and the first display device is configured to display the navigation information. The processing unit is further configured to determine the first limiting area based on the image shooting range information and the display range information.

Optionally, the processing unit 2020 is specifically configured to control to display the navigation information on a basis of a second image, where the second image is an image generated based on the second information.

Optionally, the processing unit 2020 is specifically configured to control to display the navigation information on a basis of a third image, where the third image is an image generated based on an image of the first area.

Optionally, the processing unit 2020 controls to stop displaying or playing the navigation information when one or more of the following conditions are met: duration for which the navigation information is controlled to be displayed is greater than or equal to a preset threshold; the apparatus 2000 passes through a road section indicated by the all or some guiding paths; and the apparatus 2000 arrives at the second area.

Optionally, the processing unit 2020 is further configured to control to obtain the first information based on a first instruction.

Optionally, the navigation information includes a marked place and a distance between the marked place and the first area, and the marked place indicates the second area or a place that needs to be passed through from the first area to the second area.

Optionally, the processing unit 2020 is further configured to determine the marked place and the distance between the marked place and the first area based on the second information.

Optionally, the processing unit 2020 is further configured to store, based on at least one of identity information of a user, the first area, and the second area, the all or some guiding paths from the first area to the second area, where the user includes a user who uses the first device and/or the user who uses the second device.

Optionally, the second information includes layer information, and the layer information includes at least one of the following information: a line, a text, a location of a marked place, and an identifier.

FIG. 11 is a block diagram of a navigation apparatus 2100 according to an embodiment of this application. The apparatus 2100 may be disposed in the electronic device 200 in the foregoing embodiment, or may be disposed in the mobile carrier 100 in the foregoing embodiment, or may be disposed in an electronic device associated with the mobile carrier 100.

The apparatus 2100 includes: a transceiver unit 2110, configured to receive first information sent by a first device, where the first information indicates a first area in which the first device is located; and a processing unit 2120, configured to determine second information based on the first information, where the second information is used to determine all or some guiding paths from the first area to a second area, and the second area is an area in which a second device is located, and/or the second area is an area that the first device needs to reach. The transceiver unit is further configured to send the second information to the first device.

Optionally, the first information includes first image information, and the first image indicates a first image of the first area.

Optionally, the processing unit is further configured to generate first indication information, where the first indication information indicates that the second information is generated based on the first image. The transceiver unit is further configured to send the first indication information to the first device.

Optionally, the second information includes layer information, and the layer information includes at least one of the following information: a line, a text, a location of a marked place, and an identifier.

For example, the first device may include the apparatus 2000, and the second device may include the apparatus 2100.

It should be understood that division into the units in the apparatus is merely logical function division. During actual implementation, all or some of the units may be integrated into one physical entity or may be physically separated. In addition, the units in the apparatus may be implemented in a form of software invoked by the processor. For example, the apparatus includes a processor, the processor is connected to a memory, the memory stores instructions, and the processor invokes the instructions stored in the memory, to implement any one of the foregoing methods or implement functions of each unit of the apparatus. The processor is, for example, a general purpose processor, such as a CPU or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. Using an FPGA as an example, the hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by a processor, or all units may be implemented in a form of a hardware circuit, or some units may be implemented in a form of software invoked by a processor, and a remaining part may be implemented in a form of a hardware circuit.

In embodiments of this application, the processor is a circuit that has a signal processing capability. In an implementation, the processor may be a circuit that has an instruction reading and running capability, for example, a CPU, a microprocessor, a GPU, or a DSP. In another implementation, the processor may implement a specific function by using a logical relationship of a hardware circuit. The logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be independently implemented. In an implementation, the units are integrated and implemented in a form of a system-on-a-chip (system-on-a-chip, SOC). The SOC may include at least one processor, configured to implement any one of the foregoing methods or implement functions of each unit of the apparatus. Types of the at least one processor may be different, including, for example, a CPU and an FPGA, a CPU and an artificial intelligence processor, a CPU and a GPU, and the like.

In a specific implementation process, operations performed by the transceiver unit 2010 and the processing unit 2020 (or the transceiver unit 2110 and the processing unit 2120) may be performed by a same processor, or may be performed by different processors, for example, separately performed by a plurality of processors. In an example, the one or more processors may be connected to one or more sensors in the sensing system 120 in FIG. 1, to obtain and process a driving road image from the one or more sensors. Alternatively, the one or more processors may be further connected to one or more display devices in the display apparatus 130, to control the display devices to display navigation information. For example, in a specific implementation process, the one or more processors may be disposed in a processor in a head unit, or may be a processor disposed in another in-vehicle terminal. For example, in a specific implementation process, the apparatus 2000 or the apparatus 2100 may be a chip disposed in a head unit or another in-vehicle terminal. For example, in a specific implementation process, the apparatus 2000 or the apparatus 2100 may be the computing platform 150 shown in FIG. 1 disposed in the vehicle.

An embodiment of this application further provides an apparatus. The apparatus includes a processing unit and a storage unit. The storage unit is configured to store instructions, and the processing unit executes the instructions stored in the storage unit, so that the apparatus is enabled to perform the method or the steps performed in the foregoing embodiments.

FIG. 12 is a block diagram of a navigation apparatus according to an embodiment of this application. The navigation apparatus 2200 shown in FIG. 12 may include a processor 2210, a transceiver 2220, and a memory 2230. The processor 2210, the transceiver 2220, and the memory 2230 are connected through an internal connection path. The memory 2230 is configured to store instructions. The processor 2210 is configured to execute the instructions stored in the memory 2230, so that the transceiver 2220 receives/sends some parameters. Optionally, the memory 2230 may be coupled to the processor 2210 through an interface, or may be integrated with the processor 2210.

It should be noted that the transceiver 2220 may include but is not limited to a transceiver apparatus like an input/output interface (input/output interface), to implement communication between the apparatus 2200 and another device or a communication network.

In some possible implementations, the apparatus 2200 may be disposed in an electronic device.

In some possible implementations, the apparatus 2200 may be disposed in a mobile carrier, and the processor 2210 may be a general-purpose CPU, a microprocessor, an ASIC, a GPU, or one or more integrated circuits, and is configured to execute a related program, to implement the navigation method in the method embodiments of this application. The processor 2210 may be an integrated circuit chip and has a signal processing capability. In a specific implementation process, the steps of the navigation method in this application may be completed by using a hardware integrated logic circuit in the processor 2210 or by using instructions in a form of software. Alternatively, the processor 2210 may be a general-purpose processor, a DSP, an ASIC, an FPGA or another programmable logic device, a discrete gate or transistor logic device, or a discrete hardware component. The processor may implement or execute the methods, steps, and logical block diagrams disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 2230. The processor 2210 reads information in the memory 2230, and performs the navigation method in the method embodiments of this application in combination with hardware of the processor 2210.

The memory 2230 may be a read only memory (read only memory, ROM), a static storage device, a dynamic storage device, or a random access memory (random access memory, RAM).

The transceiver 2220 uses a transceiver apparatus, for example, but not limited to, a transceiver, to implement communication between the apparatus 2200 and another device or a communication network. For example, when the apparatus 2200 is disposed in a mobile carrier, the first information may be sent through the transceiver 2220; or when the apparatus 2200 is disposed in an electronic device, the first information may be received through the transceiver 2220.

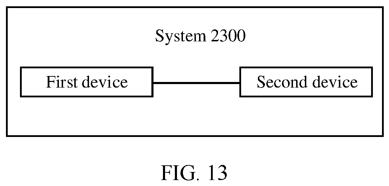

An embodiment of this application further provides a block diagram of a navigation system 2300. As shown in FIG. 13, the navigation system 2300 includes a first device and a second device. For example, the first device may include the apparatus 2000 shown in FIG. 10, and the second device may include the apparatus 2100 shown in FIG. 11. For example, the second device sends second information to the first device, and the first device displays navigation information based on the second information, where the navigation information includes all or some guiding paths that are from a first area to a second area and that are determined based on the second information.

For example, a display apparatus associated with the first device may display the navigation information. For example, when the first device is an electronic device with a display like a mobile phone, a smartwatch, or a tablet computer, the first device may display the navigation information on the display of the first device. For another example, when the first device is connected to an external display apparatus (for example, an in-vehicle display), the first device may alternatively control the external display apparatus to display the navigation information.

An embodiment of this application further provides a computer program product. The computer program product includes computer program code. When the computer program code is run on a computer, the computer is enabled to perform the method in the foregoing embodiments.

An embodiment of this application further provides a computer-readable storage medium. The computer-readable medium stores program code or instructions. When the computer program code or the instructions are executed by a processor of a computer, the processor is enabled to perform the method in the foregoing embodiments.

An embodiment of this application further provides a chip, including a processor that is configured to read instructions stored in a memory, and when the processor executes the instructions, the chip is enabled to implement the method in the foregoing embodiments.

It should be understood that, for the purpose of convenient and brief description, for a detailed work process and beneficial effect of the foregoing system, apparatus, and unit, refer to a corresponding process in the foregoing method embodiments. Details are not described herein again.

In an implementation process, steps in the foregoing methods may be completed by using a hardware integrated logical circuit in the processor or by using instructions in a form of software. The method disclosed with reference to embodiments of this application may be directly performed by a hardware processor, or may be performed through a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps of the foregoing method in combination with hardware of the processor. To avoid repetition, details are not described herein again.

It should be understood that in embodiments of this application, the memory may include a read-only memory (read-only memory, ROM) and a random access memory (random access memory, RAM), and provide instructions and data for the processor.

Terms used in embodiments of this application are merely intended to describe specific embodiments, but are not intended to limit this application. The terms "one", "a", "the", "the foregoing", "this", and "the one" of singular forms used in the specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Reference to "one embodiment" or "some embodiments" described in this specification or the like means that one or more embodiments of this application include a particular feature, structure, or characteristic described in combination with the embodiment. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include but are not limited to", unless otherwise specifically emphasized.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A navigation method, comprising:
sending, by a first device, first information to a second device, wherein the first information indicates a first area in which the first device is located;
receiving, by the first device, second information from the second device, wherein the second information is used to determine all or some guiding paths from the first area to a second area, and the second area is an area in which the second device is located, or the second area is an area that the first device needs to reach; and
controlling, by the first device, to display or play navigation information, wherein the navigation information comprises the all or some guiding paths.

2. The method according to claim 1, wherein the first information comprises first image information, and the first image information indicates a first image of the first area.

3. The method according to claim 2, wherein the first image comprises a first limiting area, the first limiting area indicates a range of a first operation performed by a user who uses the second device, and the first operation is used to generate the second information.

4. The method according to claim 3, wherein the method further comprises:
obtaining, by the first device, image shooting range information of a first sensor and display range information of a first display device, wherein the first sensor is configured to obtain an image for generating the first image information, and the first display device is configured to display the navigation information; and
determining, by the first device, the first limiting area based on the image shooting range information and the display range information.

5. The method according to any one of claims 1 to 4, wherein the controlling, by the first device, to display or play navigation information comprises:
controlling, by the first device, to display the navigation information on a basis of a second image, wherein the second image is an image generated based on the second information.

6. The method according to any one of claims 1 to 4, wherein the controlling, by the first device, to display or play navigation information comprises:
controlling, by the first device, to display the navigation information on a basis of a third image, wherein the third image is an image generated based on an image of the first area.

7. The method according to any one of claims 1 to 6, wherein the method further comprises:
controlling, by the first device, to stop displaying or playing the navigation information when one or more of the following conditions are met:
duration for which the first device controls to display the navigation information is greater than or equal to a preset threshold;
the first device passes through a road section indicated by the all or some guiding paths; and
the first device arrives at the second area.

8. The method according to any one of claims 1 to 7, wherein the method further comprises:
controlling, by the first device, to obtain the first information based on a first instruction.

9. The method according to any one of claims 1 to 8, wherein the navigation information comprises a marked place and/or a distance between the marked place and the first area, and the marked place indicates the second area or a place that needs to be passed through from the first area to the second area.

10. The method according to claim 9, wherein the method further comprises:
determining, by the first device, the marked place and the distance between the marked place and the first area based on the second information.

11. The method according to any one of claims 1 to 10, wherein the method further comprises:
controlling, by the first device based on at least one of identity information of a user, the first area, and the second area, to store the all or some guiding paths from the first area to the second area, wherein the user comprises a user who uses the first device and/or the user who uses the second device.

12. The method according to any one of claims 1 to 11, wherein the second information comprises layer information, and the layer information comprises at least one of the following information: a line, a text, a location of the marked place, and an identifier.

13. A navigation method, comprising:
receiving, by a second device, first information sent by a first device, wherein the first information indicates a first area in which the first device is located;
determining, by the second device, second information based on the first information, wherein the second information is used to determine all or some guiding paths from the first area to a second area, and the second area is an area in which the second device is located, and/or the second area is an area that the first device needs to reach; and
sending, by the second device, the second information to the first device.

14. The method according to claim 13, wherein the first information comprises first image information, and the first image information indicates a first image of the first area.

15. The method according to claim 14, wherein the method further comprises:
generating, by the second device, first indication information, wherein the first indication information indicates that the second information is generated based on the first image; and
sending, by the second device, the first indication information to the first device.

16. The method according to any one of claims 13 to 15, wherein the second information comprises layer information, and the layer information comprises at least one of the following information: a line, a text, a location of a marked place, and an identifier.

17. A navigation apparatus, comprising:
a transceiver unit, configured to: send first information to a second device, wherein the first information indicates a first area in which a first device is located; and
receive second information from the second device, wherein the second information is used to determine all or some guiding paths from the first area to a second area, and the second area is an area in which the second device is located, or the second area is an area that the first device needs to reach; and
a processing unit, configured to control to display or play navigation information, wherein the navigation information comprises the all or some guiding paths.

18. The apparatus according to claim 17, wherein the first information comprises first image information, and the first image information indicates a first image of the first area.

19. The apparatus according to claim 18, wherein the first image comprises a first limiting area, the first limiting area indicates a range of a first operation performed by a user who uses the second device, and the first operation is used to generate the second information.

20. The apparatus according to claim 19, wherein the apparatus further comprises an obtaining unit, configured to obtain image shooting range information of a first sensor and display range information of a first display device, wherein the first sensor is configured to obtain an image for generating the first image information, and the first display device is configured to display the navigation information, wherein
the processing unit is further configured to determine the first limiting area based on the image shooting range information and the display range information.

21. The apparatus according to any one of claims 17 to 20, wherein the processing unit is configured to control to display the navigation information on a basis of a second image, wherein the second image is an image generated based on the second information.

22. The apparatus according to any one of claims 17 to 20, wherein the processing unit is configured to control to display the navigation information on a basis of a third image, wherein the third image is an image generated based on an image of the first area.

23. The apparatus according to any one of claims 17 to 22, wherein the processing unit controls to stop displaying or playing the navigation information when one or more of the following conditions are met:
duration for which the navigation information is controlled to be displayed is greater than or equal to a preset threshold;
the first device passes through a road section indicated by the all or some guiding paths; and
the first device arrives at the second area.

24. The apparatus according to any one of claims 17 to 23, wherein the processing unit is further configured to:
control to obtain the first information based on a first instruction.

25. The apparatus according to any one of claims 17 to 24, wherein the navigation information comprises a marked place and/or a distance between the marked place and the first area, and the marked place indicates the second area or a place that needs to be passed through from the first area to the second area.

26. The apparatus according to claim 25, wherein the processing unit is further configured to:
determine the marked place and the distance between the marked place and the first area based on the second information.

27. The apparatus according to claims 17 to 26, wherein the processing unit is further configured to:
control, based on at least one of identity information of a user, the first area, and the second area, to store the all or some guiding paths from the first area to the second area, wherein the user comprises a user who uses the first device and/or the user who uses the second device.

28. The apparatus according to claims 17 to 27, wherein the second information comprises layer information, and the layer information comprises at least one of the following information: a line, a text, a location of the marked place, and an identifier.

29. A navigation apparatus, comprising:
a transceiver unit, configured to receive first information sent by a first device, wherein the first information indicates a first area in which the first device is located; and
a processing unit, configured to determine second information based on the first information, wherein the second information is used to determine all or some guiding paths from the first area to a second area, and the second area is an area in which a second device is located, and/or the second area is an area that the first device needs to reach, wherein
the transceiver unit is further configured to send the second information to the first device.

30. The apparatus according to claim 29, wherein the first information comprises first image information, and the first image information indicates a first image of the first area.

31. The apparatus according to claim 30, wherein the processing unit is further configured to:
generate first indication information, wherein the first indication information indicates that the second information is generated based on the first image, wherein
the transceiver unit is further configured to send the first indication information to the first device.

32. The apparatus according to any one of claims 29 to 31, wherein the second information comprises layer information, and the layer information comprises at least one of the following information: a line, a text, a location of a marked place, and an identifier.

33. A navigation apparatus, comprising:
a memory, configured to store a computer program; and
a processor, configured to execute the computer program stored in the memory, to enable the apparatus to perform the method according to any one of claims 1 to 16.

34. A mobile carrier, comprising the apparatus according to any one of claims 17 to 28, or the apparatus according to any one of claims 29 to 32, or the apparatus according to claim 33.

35. An electronic device, comprising the apparatus according to any one of claims 17 to 28, or the apparatus according to any one of claims 29 to 32, or the apparatus according to claim 33.

36. A navigation system, comprising the apparatus according to any one of claims 17 to 28, and the apparatus according to any one of claims 29 to 32.

37. A computer-readable storage medium, wherein the computer-readable storage medium stores instructions, and when the instructions are executed by a processor, the processor is enabled to perform the method according to any one of claims 1 to 16.

38. A chip, wherein the chip comprises a processor and a data interface, and the processor reads, through the data interface, instructions stored in a memory, to perform the method according to any one of claims 1 to 16.
